# EUROPEAN PATENT APPLICATION

(11) **EP 4 832 592 A1**
(43) Date of publication of application: **28.10.2026**
(21) Application number: 24916585.3
(22) Date of filing: 26.11.2024
(51) Int. Cl.: H04W 52/02, H04W 36/24

(54) **COMMUNICATION METHOD AND RELATED APPARATUS**

(30) Priority: 09.01.2024 CN 202410039817
(71) Applicant: Huawei Technologies Co., Ltd., Shenzhen, Guangdong 518129 (CN)
(72) Inventor: WEI, Dongdong, Shenzhen, Guangdong 518129 (CN); TANG, Hao, Shenzhen, Guangdong 518129 (CN); FU, Jinshu, Shenzhen, Guangdong 518129 (CN); MA, Jianglei, Shenzhen, Guangdong 518129 (CN)
(74) Representative: Isarpatent
(86) International application number: PCT/CN2024/134427
(87) International publication number: WO 2025/148535

(57) **Abstract**

This application discloses a communication method and a related apparatus. The method includes: A terminal device obtains first information, where the first information includes a measurement result of at least one cell; the terminal device receives second information, where the second information is related to a power headroom of the at least one cell; the terminal device sends a first signal to a target cell when the first information and the second information meet a first condition, where the first signal is used to trigger the target cell to adjust a transmit power; and the terminal device initiates random access to the target cell when the first information and the second information meet a second condition. This can reduce a cell handover failure rate and reduce network energy consumption.

## Description

This application claims priority to Chinese Patent Application No. 202410039817.3, filed with the China National Intellectual Property Administration on January 9, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

As the network scale continues to expand, network energy consumption also keeps increasing. During communication between a terminal device and a network device, a cell handover failure or the like may occur. In this case, the terminal device may determine, based on a measurement result of a signal, whether to perform cell handover. However, in a scenario in which a transmit power of the network device can be dynamically adjusted, if whether to perform the cell handover is directly determined based on the measurement result of the signal, a cell handover failure rate may increase.

### SUMMARY

This application provides a communication method and a related apparatus, to reduce a cell handover failure rate and reduce network energy consumption.

According to a first aspect of this application, a communication method is provided. The method is performed by a terminal device or some components (for example, a processor, a chip, or a chip system) in the terminal device. Alternatively, the terminal device may be a logical module or software that can implement all or some functions of a communication device. In the method, the terminal device obtains first information, where the first information includes a measurement result of at least one cell; the terminal device receives second information, where the second information is related to a power headroom of the at least one cell; the terminal device sends a first signal to a target cell when the first information and the second information meet a first condition, where the first signal is used to trigger the target cell to adjust a transmit power; and the terminal device initiates random access to the target cell when the first information and the second information meet a second condition.

Based on the foregoing technical solution, to reduce a handover failure probability and improve handover reliability, when determining whether to perform cell handover, the terminal device considers both the measurement result of the cell and the power headroom of the cell. When determining that the first condition is met, the terminal device triggers the target cell to adjust the transmit power, to avoid a handover failure caused by cell handover performed by the terminal device when the target cell has a power headroom but the transmit power is insufficient to cover the terminal device, thereby reducing a cell handover failure rate and reducing network energy consumption. Based on this, when the terminal device determines that the second condition is met, the terminal device initiates the random access to the target cell, to further reduce the cell handover failure rate.

Optionally, the first information is obtained based on a reference signal.

For example, when the terminal device communicates with a network device through a downlink, the reference signal may include one or more of the following: a channel state information reference signal (channel state information reference signal, CSI-RS), a secondary synchronization signal (secondary synchronization signal, SSS), a primary synchronization signal (primary synchronization signal, PSS), a cell-specific reference signal (cell-specific reference signal, CRS), a demodulation reference signal (demodulation reference signal, DMRS), a synchronization signal/physical broadcast channel block (synchronization system/physical broadcast channel block, SS/PBCH block), and the like. The SS/PBCH block may be referred to as a synchronization signal block (synchronization signal block, SSB) for short.

For another example, when the terminal device communicates with a network device to which a cell belongs through a sidelink, the reference signal may include a sidelink-synchronization signal/physical broadcast channel block (sidelink-synchronization signal/physical broadcast channel block, sidelink SSB, SL-SSB, or S-SS/PSBCH block), a sidelink-channel state information reference signal (sidelink-channel state information reference signal, SL-CSI-RS), and the like.

Optionally, the second information indicates a range of the power headroom and/or whether the power headroom exists.

Optionally, the first signal is an uplink wake-up signal (uplink wake-up signal, UL WUS).

Optionally, a serving cell may also be referred to as a network device to which the serving cell belongs, a neighboring cell may also be referred to as a network device to which the neighboring cell belongs, and the target cell may also be referred to as a network device to which the target cell belongs. Interaction between the serving cell, the neighboring cell, and the target cell may also be understood as interaction between the network device to which the serving cell belongs, the network device to which the neighboring cell belongs, and the network device to which the target cell belongs. A power headroom of a cell may also be referred to as a power headroom of a network device to which the cell belongs.

In a possible implementation of the first aspect, the at least one cell includes the serving cell and the target cell, and the first condition includes at least one of the following:
a difference between a sum of a measurement result of the target cell and a power headroom of the target cell and a sum of a measurement result of the serving cell and a power headroom of the serving cell is greater than or equal to a first threshold;
a sum of a measurement result of the serving cell and a power headroom of the serving cell is less than a second threshold; or
third information of the serving cell is received, and a measurement result of the target cell is less than a fourth threshold, where the third information indicates to perform cell handover.

Based on the foregoing technical solution, when determining whether to perform cell handover, the terminal device further considers the power headroom of the cell in addition to the measurement result of the cell. If the terminal device determines that the first condition is met, it indicates that link quality of the serving cell is poor, and link quality of the target cell is good. Based on this, in comparison with a case in which the terminal device directly performs the cell handover, the terminal device sends the first signal to the target cell, to trigger the target cell to adjust the transmit power, thereby improving a cell handover success rate, and preventing the terminal device from performing the cell handover in advance.

In a possible implementation of the first aspect, the at least one cell includes the serving cell and the target cell, and the second condition includes at least one of the following:
a sum of a measurement result of the serving cell and a power headroom of the serving cell is less than a second threshold, and a sum of a measurement result of the target cell and a power headroom of the target cell is greater than or equal to a third threshold;
a sum of a measurement result of the target cell and a power headroom of the target cell is greater than or equal to a third threshold; or
third information of the serving cell is received, and a measurement result of the target cell is greater than or equal to a fourth threshold, where the third information indicates to perform cell handover.

Based on the foregoing technical solution, if the terminal device determines that the second condition is met, it indicates that the transmit power of the target cell has exceeded a maximum adjustable range. In this case, the terminal device initiates the random access to the target cell, to prevent the terminal device from performing the cell handover in advance.

In a possible implementation of the first aspect, the terminal device includes a first module and a second module that are configured to receive and send information, the first module and the second module are different in at least one of power consumption, hardware composition, and a waveform of a transmitted signal, power consumption of the first module is lower than power consumption of the second module, and that the terminal device sends the first signal to the target cell includes:

The terminal device sends the first signal to the target cell based on the first module.

Based on the foregoing technical solution, the terminal device includes the first module with the lower power consumption and the first module with the higher power consumption. The terminal device sends the first signal to the network device based on the first module with the lower power consumption, so that the energy consumption can be further reduced.

Optionally, the terminal device sends the first signal to the target cell based on the first module, and the target cell receives the first signal based on the first module, and adjusts a transmit power of a second module of the target cell based on the first signal.

Optionally, the terminal device sends the first signal to the target cell based on the second module. Correspondingly, the network device receives the first signal based on the second module, and then adjusts the transmit power of the second module of the target cell based on the first signal.

In a possible implementation of the first aspect, the method further includes:

The terminal device receives fourth information of the serving cell, where the fourth information includes configuration information of a second signal, the second signal is used for uplink synchronization, the second signal and the first signal are different in at least one of a time-frequency resource, a sequence, and a chirp slope, and the first signal is used to trigger the target cell to adjust the transmit power.

Based on the foregoing technical solution, the terminal device can complete uplink synchronization by using the second signal.

Optionally, the second signal is a UL WUS. The second signal and the first signal are different in at least one of the time-frequency resource, a signal waveform, or the sequence.

In a possible implementation of the first aspect, a method for obtaining, by the terminal device, that a transmit power of the serving cell and/or the transmit power of the target cell is adjusted includes:
receiving, by the terminal device, fifth information from the serving cell, where the fifth information indicates adjustment information of the transmit power of the target cell, and/or the fifth information indicates power headroom information of the serving cell and/or power headroom information of the target cell.

Optionally, the power headroom information of the target cell indicates a range of the power headroom of the target cell and/or whether the power headroom of the target cell exists.

Optionally, the power headroom information of the serving cell indicates a range of the power headroom of the serving cell and/or whether the power headroom of the serving cell exists.

Optionally, the fifth information is indicated by a synchronization sequence, carried in a master information block (master information block, MIB), broadcast through a system information block (system information block, SIB), or carried in a MAC CE or DCI.

Optionally, the adjustment information indicating the transmit power of the serving cell and/or the adjustment information indicating the transmit power of the target cell, and the power headroom information indicating the serving cell and/or the power headroom information indicating the target cell may be transmitted via same information (the fifth information) or a same packet, or may be transmitted via different information (for example, the fifth information and sixth information) or different packets.

In a possible implementation of the first aspect, the method further includes:

The terminal device receives fifth information from a neighboring cell, where the fifth information is related to a power headroom of at least one neighboring cell, and the at least one neighboring cell includes a serving cell and/or a target cell.

The terminal device sends first information and fifth information to the serving cell.

Based on the foregoing technical solution, when the terminal device reports a measurement result to the serving cell, impact of the power headroom of the neighboring cell is considered, to avoid a handover failure caused by cell handover performed by the terminal device when the neighboring cell has a power headroom but the transmit power is insufficient to cover the terminal device, thereby reducing a cell handover failure rate.

Optionally, the fifth information is indicated by a synchronization sequence, carried in a master information block (master information block, MIB), broadcast through a system information block (system information block, SIB), or carried in a MAC CE or DCI.

Optionally, the fifth information indicates a range of the power headroom of the neighboring cell and/or whether the power headroom of the neighboring cell exists.

In a possible implementation of the first aspect, the terminal device includes the first module and the second module that are configured to receive and send information, the first module and the second module are different in at least one of the power consumption, the hardware composition, and the waveform of the transmitted signal, the power consumption of the first module is lower than the power consumption of the second module, and the method further includes:

The terminal device receives configuration information of a third signal based on the first module.

The terminal device performs cell selection and/or cell reselection based on a measurement result of the third signal.

Correspondingly, a network side also has a first module and a second module that are configured to receive and send information. A transmit power of the first module is relatively fixed, and the first module is configured to ensure coverage. A transmit power of the second module is dynamically adjusted as required. When performing the cell selection and/or the cell reselection, the terminal device receives the configuration information of the third signal based on the first module, so that a receiving success rate can be improved.

According to a second aspect of this application, a communication method is provided. The method is performed by a terminal device or some components (for example, a processor, a chip, or a chip system) in the terminal device. Alternatively, the terminal device may be a logical module or software that can implement all or some functions of a communication device. The terminal device includes a first module and a second module that are configured to receive and send information, the first module and the second module are different in at least one of power consumption, hardware composition, and a waveform of a transmitted signal, and power consumption of the first module is lower than power consumption of the second module. In the method, the terminal device receives a wake-up signal from a serving cell based on the first module; the terminal device obtains a measurement result of a fourth signal based on the second module; and the terminal device sends a first signal to the serving cell when the measurement result of the fourth signal is less than a fifth threshold, where the first signal is used to trigger the serving cell to adjust a transmit power; or the terminal device sends or receives a signal based on the second module when the measurement result of the fourth signal is greater than or equal to a fifth threshold.

The power consumption of the first module is lower than the power consumption of the second module. Therefore, a transmit power of the first module is relatively fixed. A signal coverage range of the first module is generally larger than a signal coverage range of the second module, and the first module is generally configured to ensure coverage. A transmit power of the second module can be dynamically adjusted. It is considered that the terminal device in an idle state or an inactive state may move out of the coverage range of the second module. The terminal device receives a wake-up signal based on the first module, so that a signal receiving success rate can be improved. In comparison with receiving the wake-up signal based on the second module, network energy consumption is further reduced. After the terminal device wakes up the second module based on the wake-up signal, when the measurement result of the fourth signal is less than the fifth threshold, the terminal device is triggered to send a first signal, to prevent the terminal device from performing cell handover in advance, and further reduce the network energy consumption.

According to a third aspect of this application, a communication method is provided. The method is performed by a first network device or some components (for example, a processor, a chip, or a chip system) in the first network device. Alternatively, the first network device may be a logical module or software that can implement all or some functions of a communication device. The first network device is a target cell/a network device to which the target cell belongs. In the method, the first network device receives a first signal, and the first network device adjusts a transmit power of the first network device based on the first signal.

The first network device receives the first signal from a terminal device, adjusts the transmit power of the first network device, and communicates with the terminal device based on an adjusted transmit power, to prevent the terminal device from performing cell handover in advance.

In a possible implementation of the third aspect, the first network device includes a first module and a second module that are configured to receive and send information, the first module and the second module are different in at least one of power consumption, hardware composition, and a waveform of a transmitted signal, power consumption of the first module is lower than power consumption of the second module, and that the first network device receives the first signal includes:

The first network device receives the first signal based on the first module.

That the first network device adjusts the transmit power of the first network device based on the first signal includes:

The first network device adjusts a transmit power of the second module based on the first signal.

Compared with the second module, the first module has a larger coverage range and the lower power consumption. Therefore, the first network device receives the first signal based on the first module with the lower power consumption, so that a success rate of receiving the first signal can be improved, and network energy consumption can be reduced. The transmit power of the second module can be dynamically adjusted. Therefore, after receiving the first signal based on the first module, the first network device may adjust the transmit power of the second module based on the first signal, and communicate with the terminal device based on the adjusted transmit power, so that the to-be-accessed terminal device is within the coverage range of the first network device.

In a possible implementation of the third aspect, the method further includes:

The first network device sends fifth information to a serving cell, where the fifth information indicates adjustment information of a transmit power of the target cell and/or power headroom information of the target cell.

Optionally, the power headroom information of the target cell indicates a range of the power headroom of the target cell and/or whether the power headroom of the target cell exists.

Optionally, the fifth information is indicated by a synchronization sequence, carried in a master information block (master information block, MIB), broadcast through a system information block (system information block, SIB), or carried in a MAC CE or DCI.

Optionally, the adjustment information indicating the transmit power of the target cell, and the power headroom information indicating the target cell may be transmitted via same information (the fifth information) or a same packet, or may be transmitted via different information (for example, the fifth information and sixth information) or different packets.

In a possible implementation of the third aspect, the method further includes:
The first network device receives seventh information from the serving cell, where the seventh information is used to request the target cell to adjust the transmit power.

Optionally, the seventh information carries a power adjustment value.

According to a fourth aspect of this application, a communication method is provided. The method is performed by a second network device or some components (for example, a processor, a chip, or a chip system) in the second network device. Alternatively, the second network device may be a logical module or software that can implement all or some functions of a communication device. The second network device is a serving cell or a network device to which the serving cell belongs. In the method, the second network device sends eighth information to a terminal device, where the eighth information is used to configure at least one of the following information:
a first threshold corresponding to a difference between a sum of a measurement result of a target cell and a power headroom of the target cell and a sum of a measurement result of the serving cell and a power headroom of the serving cell;
a second threshold corresponding to a sum of a measurement result of the serving cell and a power headroom of the serving cell;
a third threshold corresponding to a sum of a measurement result of a target cell and a power headroom of the target cell;
a fourth threshold corresponding to a measurement result of a target cell;
a fifth threshold corresponding to a measurement result of a fourth signal; or
configuration information of a first signal.

Optionally, the eighth information may be carried in at least one of the following: system information, RRC signaling, or a MAC CE. This may alternatively be predefined.

In a possible implementation of the fourth aspect, the method further includes:

The second network device receives fifth information from at least one neighboring cell, where the fifth information is related to a power headroom of the at least one neighboring cell, and the at least one neighboring cell includes a serving cell and/or a target cell.

Based on the foregoing technical solution, the second network device may obtain the fifth information based on interaction between the cells, and a first network device sends the fifth information to the serving cell, so that the serving cell determines, based on the power headroom of the neighboring cell, whether to perform cell handover and whether to trigger the target cell to adjust a transmit power.

Optionally, the second network device may alternatively receive the fifth information reported by the terminal device.

In a possible implementation of the fourth aspect, the method further includes:

The second network device sends fifth information to the terminal device, where the fifth information indicates adjustment information of a transmit power of the serving cell and/or adjustment information of a transmit power of the target cell, and/or the fifth information indicates power headroom information of the serving cell and/or power headroom information of the target cell.

In a possible implementation of the fourth aspect, the method further includes:

The second network device sends seventh information to the target cell, where the seventh information is used to request the target cell to adjust the transmit power.

According to a fifth aspect of this application, a communication method is provided. The method is performed by a second network device or some components (for example, a processor, a chip, or a chip system) in the second network device. Alternatively, the second network device may be a logical module or software that can implement all or some functions of a communication device. The second network device is a serving cell or a network device to which the serving cell belongs. The second network device includes a first module and a second module that are configured to receive and send information, the first module and the second module are different in at least one of power consumption, hardware composition, and a waveform of a transmitted signal, power consumption of the first module is lower than power consumption of the second module, and the second network device is the network device to which the serving cell belongs. In the method, the second network device sends a wake-up signal to a terminal device based on the first module; and the second network device receives a first signal from the terminal device, and adjusts a transmit power of the second network device based on the first signal. Alternatively, the second network device sends a wake-up signal to a terminal device based on the first module, and the second network device sends or receives a signal based on the second module.

According to a sixth aspect of this application, a communication apparatus is provided. The apparatus includes a transceiver unit and a processing unit. The processing unit is configured to obtain first information, where the first information includes a measurement result of at least one cell. The transceiver unit is configured to receive second information, where the second information is related to a power headroom of the at least one cell. The processing unit is further configured to send a first signal to a target cell when the first information and the second information meet a first condition, where the first signal is used to trigger the target cell to adjust a transmit power. The processing unit is further configured to initiate random access to the target cell when the first information and the second information meet a second condition.

In the sixth aspect of this application, the component modules of the communication apparatus may be further configured to perform the steps performed in the possible implementations of the first aspect, and achieve corresponding technical effects. For details, refer to the first aspect. Details are not described herein again.

According to a seventh aspect of this application, a communication apparatus is provided. The device includes a transceiver unit and a processing unit. The processing unit is configured to receive a wake-up signal from a serving cell based on a first module. The processing unit is configured to obtain a measurement result of a fourth signal based on a second module. The transceiver unit is configured to send a first signal to the serving cell when the measurement result of the fourth signal is less than a fifth threshold, where the first signal is used to trigger the serving cell to adjust a transmit power; or the transceiver unit is configured to send or receive a signal based on the second module when the measurement result of the fourth signal is greater than or equal to a fifth threshold.

In the seventh aspect of this application, the component modules of the communication apparatus may be further configured to perform the steps performed in the possible implementations of the second aspect, and achieve corresponding technical effects. For details, refer to the second aspect. Details are not described herein again.

According to an eighth aspect of this application, a communication apparatus is provided. The apparatus includes a transceiver unit and a processing unit. The transceiver unit is configured to receive a first signal. The processing unit is configured to adjust a transmit power of a first network device based on the first signal.

In the eighth aspect of this application, the component modules of the communication apparatus may be further configured to perform the steps performed in the possible implementations of the third aspect, and achieve corresponding technical effects. For details, refer to the third aspect. Details are not described herein again.

According to a ninth aspect of this application, a communication apparatus is provided. The apparatus includes a transceiver unit. The transceiver unit is configured to send eighth information to a terminal device, where the eighth information is used to configure one or more of a first threshold, a second threshold, a third threshold, a fourth threshold, a fifth threshold, or configuration information of a first signal.

In the ninth aspect of this application, the component module of the communication apparatus may be further configured to perform the steps performed in the possible implementations of the fourth aspect, and achieve corresponding technical effects. For details, refer to the fourth aspect. Details are not described herein again.

According to a tenth aspect of this application, a communication apparatus is provided. The apparatus includes a transceiver unit and a processing unit. The transceiver unit is configured to send a wake-up signal to a terminal device based on a first module. The transceiver unit is configured to receive a first signal from the terminal device. The processing unit is configured to adjust a transmit power of a second network device based on the first signal. Alternatively, the transceiver unit is configured to send a wake-up signal to a terminal device based on a first module; and the processing unit is configured to send or receive a signal based on a second module.

In the tenth aspect of this application, the component modules of the communication apparatus may be further configured to perform the steps performed in the possible implementations of the fifth aspect, and achieve corresponding technical effects. For details, refer to the fifth aspect. Details are not described herein again.

According to an eleventh aspect of this application, a communication apparatus is provided, including at least one processor. The at least one processor is coupled to a memory, the memory is configured to store a program or instructions, and the at least one processor is configured to execute the program or the instructions, to cause the apparatus to implement the method according to any possible implementation in any one of the first aspect to the fifth aspect.

In a possible implementation, the communication apparatus further includes the memory. Optionally, the processor and the memory are integrated together.

According to a twelfth aspect of this application, a communication apparatus is provided, including at least one logic circuit and an input/output interface. The logic circuit is configured to perform the method according to any possible implementation in any one of the first aspect to the fifth aspect.

According to a thirteenth aspect of this application, a communication system is provided. The communication system includes the foregoing terminal device, the foregoing first network device, and the foregoing second network device.

According to a fourteenth aspect of this application, a computer-readable storage medium is provided. The storage medium is configured to store one or more computer-executable instructions. When the computer-executable instructions are executed by a processor, the processor performs the method according to any possible implementation in any one of the first aspect to the fifth aspect.

According to a fifteenth aspect of this application, a computer program product (or referred to as a computer program) is provided. When the computer program in the computer program product is executed by a processor, the processor performs the method according to any possible implementation in any one of the first aspect to the fifth aspect.

According to a sixteenth aspect of this application, a chip system is provided. The chip system includes at least one processor, configured to support a communication apparatus in implementing the method according to any possible implementation in any one of the first aspect to the fifth aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit, and the interface circuit provides program instructions and/or data for the at least one processor.

For technical effects brought by any design in the sixth aspect to the sixteenth aspect, refer to the technical effects brought by the different designs in the first aspect to the fifth aspect. Details are not described herein again.

### BRIEF DESCRIPTION OF DRAWINGS

FIG. 1a to FIG. 1f are diagrams of communication systems according to this application;
FIG. 2a is a diagram of a coverage range after a transmit power of a PDSCH is adjusted;
FIG. 2b is a diagram of coverage ranges of a main radio and a low-power radio of a network device;
FIG. 2c is a diagram of triggering a target cell to increase a transmit power;
FIG. 3 is a diagram of implementation of a communication method according to an embodiment of this application;
FIG. 4 is a schematic flowchart of cell handover in a basic handover scenario according to an embodiment of this application;
FIG. 5 is another diagram of implementation of a communication method according to an embodiment of this application;
FIG. 6 is a diagram of determining to trigger transmit power adjustment in a paging scenario according to an embodiment of this application; and
FIG. 7 to FIG. 11 are diagrams of communication apparatuses according to this application.

### DESCRIPTION OF EMBODIMENTS

First, some terms in embodiments of this application are described for ease of understanding by a person skilled in the art.
(1) A terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device such as a mobile phone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal device (terminal), a user equipment (user equipment, UE), a mobile terminal device (mobile terminal, MT), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and largesized devices that can implement complete or partial functions without depending on smartphones, such as smart watches or smart glasses, and devices that dedicated to only one type of application function and need to work with other devices such as smartphones, such as various smart bands, smart helmets, or smart jewelry for monitoring physical signs.

The terminal device may alternatively be an uncrewed aerial vehicle, a robot, a terminal device in device-to-device (device-to-device, D2D) communication, a terminal device in vehicle-to-everything (vehicle-to-everything, V2X), a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a terminal device of 5G communication, and a 6G terminal device includes but is not limited to a vehicle, a cellular network terminal device (integrating a function of a satellite terminal device), an uncrewed aerial vehicle, and an internet of things (internet of things, IoT) device.

In embodiments of this application, the terminal device may further obtain an AI service provided by a network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a base station or a transmission reception point in a 6G communication system or a next-generation wireless communication system, a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 6G network and a next-generation network of the 6G network.

In embodiments of this application, the network device may alternatively be a network node having an AI capability, and may provide an AI service for a terminal device or another network device, for example, may be an AI node, a computational power node, a RAN node having an AI capability, or a core network element having an AI capability on a network device (an access network or a core network).

In embodiments of this application, an apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used for describing the technical solutions provided in embodiments of this application.

### (3) Beam (beam)

As a communication resource, the beam is special directional sending or receiving effect formed by a transmitter or a receiver of a network device or a terminal device by using an antenna array, and is similar to a light beam formed by converging light to a direction by using a flashlight. Signal sending and receiving in a form of the beam can effectively increase a signal transmission distance.

Beams may be classified into a transmission beam and a reception beam. A technology of forming the beam may be a beamforming technology or another technical means. The beamforming includes transmission beamforming and reception beamforming. The beamforming technology may be specifically a digital beamforming technology, an analog beamforming technology, a hybrid digital/analog beamforming technology, or the like.

The transmission beam is a beam that has a spatial directivity and that is formed by a signal sent by a transmit end device by using a specific beamforming weight. In an uplink direction, the transmit end device may be a terminal device; and in a downlink direction, the transmit end device may be a network device.

The reception beam is a beam that has spatial directivity and that is formed by a signal received by a receive end device by using a specific beamforming weight. In an uplink direction, the receive end device may be a network device. In a downlink direction, the receive end device may be a terminal device.

The beam may be a wide beam, a narrow beam, or another type of beam.

The beam generally corresponds to a resource. For example, during beam measurement, the network device measures different beams by using different resources, and the terminal device feeds back measured resource quality, so that the network device can know quality of a corresponding beam. During data transmission, the beam may also be indicated by using the resource corresponding to the beam. For example, the network device indicates a transmission configuration indicator-state (state) by using a transmission configuration index (transmission configuration index, TCI) field in downlink control information (downlink control information, DCI), and the terminal device determines, based on a reference resource included in the TCI-state, a beam corresponding to the reference resource. Different beams may be considered as different resources, and same information or different information may be sent by using (through) different beams.

A beam pair is established based on the concept of the beam. One beam pair usually includes one transmission beam of a transmit end device and one reception beam of a receive end device. It should be noted that, in the following descriptions, a transmission beam is a transmission beam of a network device, and a reception beam is a reception beam of a terminal device, unless otherwise specified.

In a communication system such as a 5G new radio (new radio, NR) system, both the network device and the terminal device may generate one or more transmission beams and one or more reception beams. Before data transmission, the network device and the terminal device need to perform beam alignment. In a communication protocol, a beam may be specifically represented as a digital beam, an analog beam, a spatial domain filter (spatial domain filter), a spatial filter (spatial filter), a spatial parameter (spatial parameter), TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. It may be understood that in embodiments of this application, the beam is uniformly used for description, but the beam may be replaced with and understood as another equivalent concept, and is not limited to the foregoing mentioned concepts.

### (4) Resource

In a communication protocol, a reference signal is configured in a form of a resource. A network device configures each reference signal for a terminal device in the form of the resource. One resource is one configuration information unit, and usually includes a parameter related to a reference signal, for example, a time-frequency resource position, a quantity of ports, or a time domain type (periodic/semi-static/aperiodic) of the reference signal.

The resource may be an uplink signal resource, or may be a downlink signal resource.

An uplink signal includes but is not limited to a sounding reference signal (sounding reference signal, SRS) and a demodulation reference signal (demodulation reference signal, DMRS).

The downlink signal includes but is not limited to: a channel state information reference signal (channel state information reference signal, CSI-RS), a cell-specific reference signal (cell-specific reference signal, CRS), a demodulation reference signal (demodulation reference signal, DMRS), and a synchronization signal/physical broadcast channel block (synchronization system/physical broadcast channel block, SS/PBCH block). The SS/PBCH block may be referred to as a synchronization signal block (synchronization signal block, SSB) for short.

The resource may be configured by using an RRC message. In terms of a configuration structure, one resource is one data structure, and includes a related parameter of an uplink/downlink signal corresponding to the resource, for example, a type of the uplink/downlink signal, a resource granularity carrying the uplink/downlink signal, sending time and a sending periodicity of the uplink/downlink signal, and a quantity of ports used to send the uplink/downlink signal. Each resource of the uplink/downlink signal has a unique identifier, to identify the resource of the downlink signal.

### (5) Chirp signal

A chirp (chirp) signal means that when a pulse is encoded, a carrier frequency of the chirp signal increases linearly in a pulse duration, that is, a signal whose frequency increases or decreases over time.

(6) Configuration and pre-configuration: In this application, both configuration and pre-configuration are used. The configuration means that a network device/server sends configuration information of some parameters or values of parameters to a terminal device by using a message or signaling, so that the terminal device determines, based on the values or the information, a communication parameter or a resource used for transmission. Similar to the configuration, the pre-configuration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(7) The terms "system" and "network" may be used interchangeably in embodiments of this application. "A plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(8) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It can be understood that necessary processing, for example, encoding or modulation, may be performed on information between a source end that sends the information and a destination end, but the destination end can understand valid information from the source end. Similar descriptions in this application may be understood similarly, and details are not described again.

(9) In embodiments of this application, "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It can be understood that, for a sender of the indication information, the indication information may indicate the to-be-indicated information, and for a receiver of the indication information, the indication information may be used to determine the to-be-indicated information.

In this application, unless otherwise specified, mutual reference may be made between same or similar parts of various embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application do not constitute a limitation on the protection scope of this application.

This application may be applied to an LTE system, an NR system, or a communication system evolved after 5G (for example, beyond 5G (Beyond 5G, B5G), 5.5G, or 6G). The communication system includes at least one network device and/or at least one terminal device.

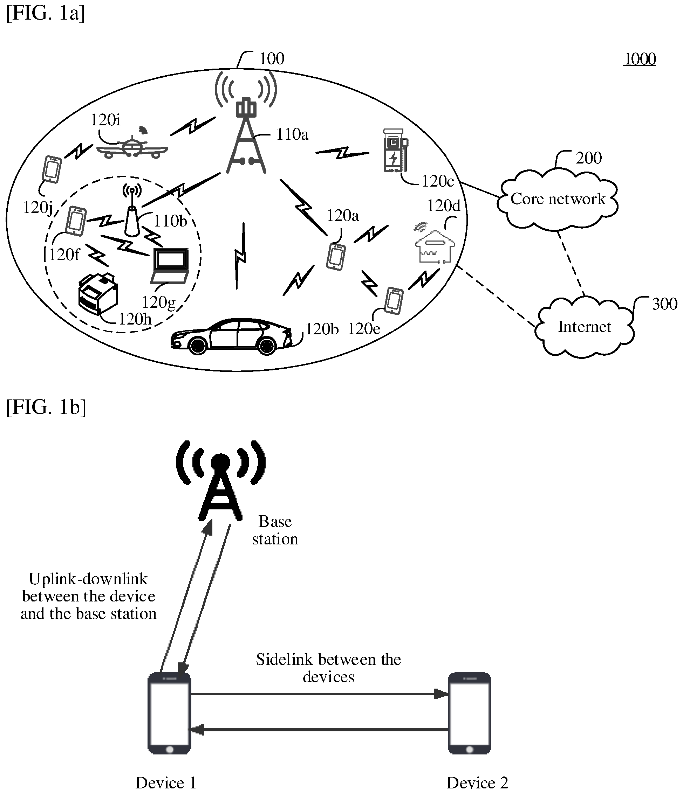

FIG. 1a is a diagram of an architecture of a communication system 1000 to which an embodiment of this application is applied. As shown in FIG. 1a, the communication system includes a radio access network (radio access network, RAN) 100 and a core network 200. Optionally, the communication system 1000 may further include an internet 300. The RAN 100 includes at least one RAN node (for example, 110a and 110b in FIG. 1a, collectively referred to as 110), and may further include at least one terminal device (for example, 120a to 120j in FIG. 1a, collectively referred to as 120). The RAN 100 may further include another RAN node, for example, a wireless relay device and/or a wireless backhaul device (not shown in FIG. 1a). The terminal device 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Mutual connections between terminal devices and between RAN nodes may be implemented in a wired or wireless manner.

The RAN 100 may be an evolved universal terrestrial radio access (evolved universal terrestrial radio access, E-UTRA) system, an NR system, a 6G system, or a future radio access system defined in 3GPP. The RAN 100 may further include the foregoing two or more different radio access systems. The RAN 100 may alternatively be an open RAN (open RAN, O-RAN).

For ease of description, the following is described by using an example in which a base station is used as the RAN node.

The base station and the terminal device may be at fixed locations or may be movable. The base station and the terminal device may be deployed on land, including indoor or outdoor devices, or handheld or vehicle-mounted devices; may be deployed on a water surface; or may be deployed on an airplane, a balloon, or a satellite. Application scenarios of the base station and the terminal device are not limited in embodiments of this application.

Roles of the base station and the terminal device may be relative. For example, a helicopter or an uncrewed aerial vehicle 120i in FIG. 1a may be configured as a mobile base station. For the terminal devices 120j accessing the radio access network 100 via 120i, the terminal device 120i is a base station. However, for the base station 110a, 120i is a terminal device, that is, communication between 110a and 120i is performed according to a wireless air interface protocol. Certainly, communication between 110a and 120i may alternatively be performed according to an interface protocol between base stations. In this case, for 110a, 120i is also a base station. Therefore, the base station and the terminal device may be collectively referred to as a communication apparatus, 110a and 110b in FIG. 1a may be referred to as a communication apparatus having a base station function, and 120a to 120j in FIG. 1a may be referred to as a communication apparatus having a terminal device function.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal device may be performed by a module (for example, a chip or a modem) in the terminal device, or may be performed by an apparatus including the function of the terminal device.

FIG. 1b is another diagram of a communication system according to an embodiment of this application. In FIG. 1b, an example in which a network device is a base station is used for description, and both a device 1 and a device 2 are terminal devices. As shown in FIG. 1b, a communication link between the device 1 and the device 2 may be referred to as a sidelink (sidelink, SL), and a communication link between the device 1 (or the device 2) and the base station may be referred to as an uplink-downlink, including an uplink (uplink) and a downlink (downlink). It can be learned that the sidelink is a communication mechanism in which different terminal devices directly communicate with each other without the network device.

Optionally, on the sidelink (sidelink, SL), generally, a transmit device and a receive device may be terminal devices or network devices of a same type, or may be a road side station (road side unit, RSU) and a terminal device. From a perspective of a physical entity, the RSU is a road side station or a road side unit. From a perspective of a function, the RSU may be a terminal device, or may be a network device. This is not limited in this application. In other words, the transmit device is a terminal device, and the receive device is also a terminal device; or the transmit device is a road side station, and the receive device is a terminal device; or the transmit device is a terminal device, and the receive device is a road side station. In addition, the sidelink may alternatively be a link between base station devices of a same type or different types. In this case, a function of the sidelink is similar to that of a trunk link, but an air interface technology used by the sidelink may be the same as or different from that used by the trunk link.

For example, broadcast, unicast, and multicast are supported on the sidelink.

Broadcast communication is similar to broadcasting system information by the network device. To be specific, the terminal device sends data of a broadcast service to the outside without encryption. Any other terminal device within an effective receiving range may receive the data of the broadcast service if the terminal device is interested in the broadcast service.

Unicast communication is similar to data communication performed after an RRC connection is established between the terminal device and the network device, and a unicast connection needs to be first established between two terminal devices. After the unicast connection is established, the two terminal devices may perform data communication based on a negotiated identifier. The data may or may not be encrypted. In comparison with the broadcast, in the unicast communication, the unicast communication can be performed only between the two terminal devices that have established the unicast connection.

Optionally, one unicast communication on the sidelink corresponds to a pair of a source layer 2 identifier (source layer 2 identifier, denoted as a source L2 ID) and a destination layer 2 identifier (destination Layer 2 Identifier, denoted as a destination L2 ID). Optionally, a subheader of a media access control protocol data unit (media access control protocol data unit, MAC PDU) on the sidelink includes the source L2 ID and the destination L2 ID, so that data is transmitted to a correct receive end.

Multicast communication is communication between all terminal devices in a communication group, and any terminal device in the group can receive and send data of a multicast service.

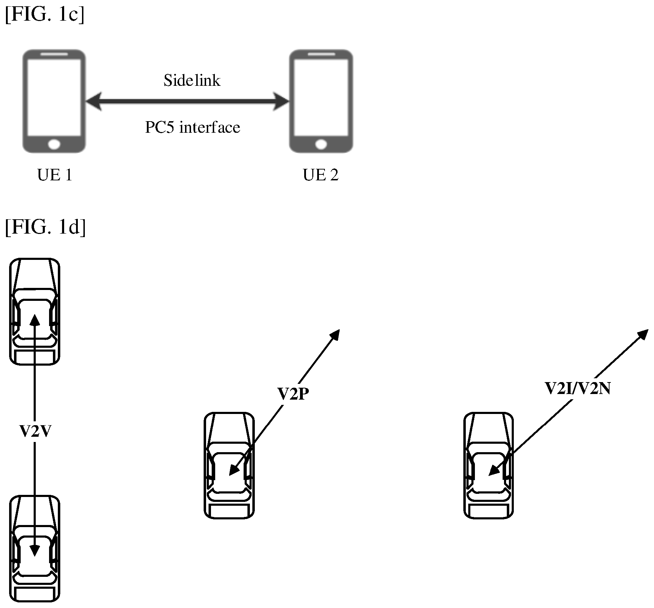

As shown in FIG. 1c, when a terminal device (denoted as a UE 1) directly communicates with another terminal device (denoted as a UE 2) without a network device, a communication link between the two terminal devices may be referred to as a sidelink (sidelink). In other words, the two terminal devices communicate with each other through a proximity-based services communication 5 (proximity-based services communication 5, PC5) interface.

As shown in FIG. 1d, as a typical application of the sidelink, a V2X communication technology uses and enhances current cellular network functions and elements, to implement low-latency and high-reliability communication between various nodes in a vehicle network, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, or vehicle-to-network (Vehicle-to-Network, V2N for short) communication. As a cellular system evolves from 4G long term evolution (Long Term Evolution, LTE for short) to 5G, C-V2X evolves from LTE-V2X to NR-V2X (New Radio V2X, NR-V2X for short).

In addition, V2X communication has great potential in reducing vehicle collision accidents, thereby reducing corresponding casualties. Advantages of V2X are not limited to improving safety. A vehicle that can perform V2X communication helps better perform traffic management, to further promote green traffic and lower energy consumption. An intelligent transportation system (Intelligent Transportation System, ITS for short) is an application in combination with V2X. Based on the V2X technology, a vehicle user (Vehicle UE, V-UE for short) can send, to a V-UE nearby, some information about the vehicle user, for example, information such as a location, a speed, and an intention (turning, merging, or reversing), and information triggered by some periodic and aperiodic events, and the V-UE can also receive information from a user nearby in real time. 5G NR V2X can support lower transmission delay, more reliable communication transmission, higher throughput, and better user experience, thereby meeting requirements of more extensive application scenarios. Further, a vehicle-to-vehicle communication technology supported by V2X may be further applied to device-to-device (Device-to-Device, D2D for short) communication in any system.

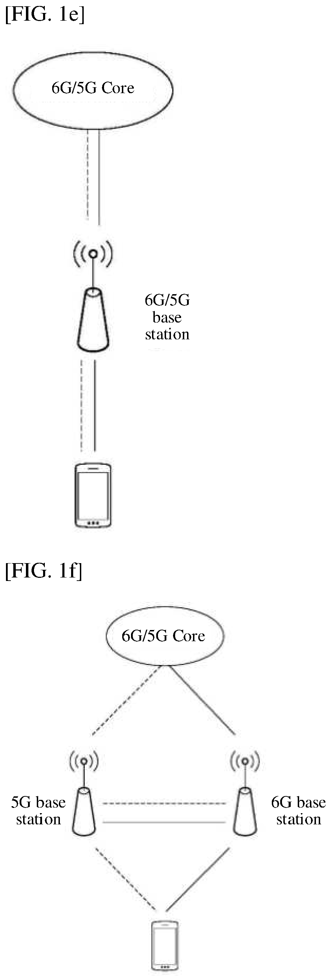

As shown in FIG. 1e, an application scenario of this embodiment of this application may be an SA scenario. A terminal device may be connected to a single base station. A base station connected to the terminal device and a core network connected to the base station are of a same standard. For example, if the core network is a 5G Core, the base station corresponds to a 5G base station, and the 5G base station is connected to the 5G Core. For another example, if the core network is a 6G Core, the base station corresponds to a 6G base station, and the 6G base station is connected to the 6G Core. It should be noted that there may be one or more terminal devices.

As shown in FIG. 1f, an application scenario of this embodiment of this application may be a DC scenario, and a terminal device may be connected to base stations of different standards or a same standard. For example, a core network is a 5G Core, and the terminal device may be connected to both a 5G base station and a 6G base station, where the 5G base station is used as a primary station, and the 6G base station is used as a secondary station. For another example, a core network is a 6G Core, and the terminal device may be connected to both a 5G base station and a 6G base station, where the 6G base station is used as a primary station, and the 5G base station is used as a secondary station. For another example, a core network may be a 6G Core, and the terminal device may be connected to two 6G base stations, where a primary station and a secondary station are the 6G base stations. It should be noted that there may be one or more terminal devices.

In a wireless communication system, communication between a terminal device and a network device complies with a specific protocol layer structure. For example, the protocol layer structure may include an RRC layer, a packet data convergence protocol (packet data convergence protocol, PDCP) layer, a radio link control (radio link control, RLC) layer, a media access control (media access control, MAC) layer, a physical (physical, PHY) layer, and the like. In the 3GPP standard, a layer 1 (layer 1, L1) may be a PHY layer, a layer 2 may be a MAC layer, and a layer 3 may be an RRC layer.

The technical solutions provided in this application may be applied to the wireless communication system (for example, the system shown in FIG. 1a, FIG. 1b, FIG. 1c, FIG. 1d, FIG. 1e, or FIG. 1f), and are applicable to scenarios such as terrestrial cellular communication, non-terrestrial communication NTN, satellite communication, high-altitude communication platform (high-altitude platform station, HAPS) communication, V2X, integrated access and backhaul (integrated access and backhaul, IAB), and reconfigurable intelligent surface (reconfigurable intelligent surface, RIS) communication.

In the wireless communication system, as the network scale continues to expand, the network energy consumption also keeps increasing. To reduce the network energy consumption, one method is to enable adaptive adjustment of a power deviation between a physical downlink shared channel (physical downlink shared channel, PDSCH) and a channel state information reference signal (channel state information reference signal, CSI-RS). The network device may broadcast a transmit power of an SSB via system information, to indicate a transmit power of a secondary synchronization signal (secondary synchronization signal, SSS). In addition, the network device may further configure a power deviation between a non-zero power channel state information reference signal (non-zero power channel state information reference signal, NZP CSI-RS) and the SSB via RRC signaling, to determine a transmit power of the NZP CSI-RS. In addition, the network device further configures a power deviation between a PDSCH and the NZP CSI-RS.

To better effectively adjust the power deviation between the PDSCH and the CSI-RS, CSI measurement and feedback are correspondingly enhanced in a protocol. A main idea is as follows: Measurement and reporting are performed based on different power deviation values, to assist the network device in determining an optimal power deviation between the PDSCH and the CSI-RS, and correspondingly notify the terminal device of the optimal power deviation.

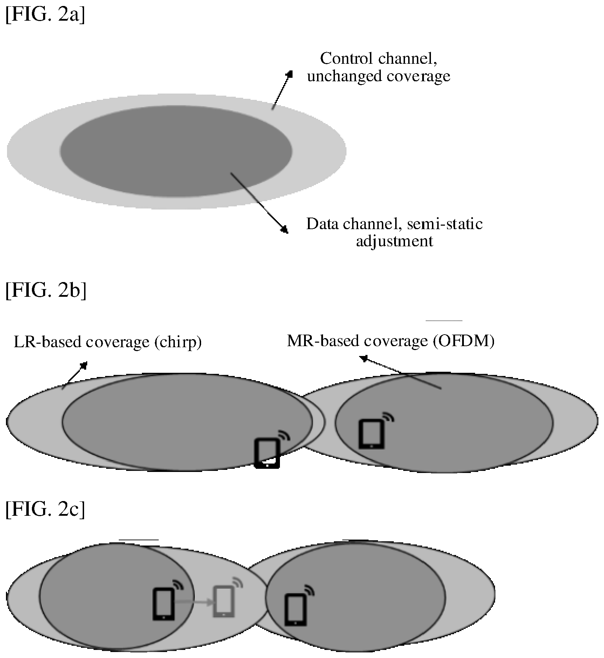

As shown in FIG. 2a, based on the foregoing enhancement, a transmit power of the PDSCH can be more effectively semi-statically adjusted. In other words, the transmit power of the PDSCH may be less than a maximum transmit power, and energy consumption of the network device is reduced by reducing the transmit power. However, based on the foregoing enhancement, only the transmit power of the PDSCH is adjusted. A transmit power of a common signal, for example, an SSB, a system information block 1 (system information block, SIB1), another system information (other system information, OSI), or a paging message, is not adjusted. The transmit power of the common signal is still sent via the SIB1, and whether to adjust the transmit power is left to the network device for implementation. After determining to adjust the transmit power, the network device correspondingly updates a SIB1 message. However, in an actual live network, after network planning is performed, in order to avoid a coverage hole, the transmit power of the common signal is not adjusted.

In view of the foregoing problem, to reduce the energy consumption of the network device, a first module and a second module are deployed on the network device. The first module and the second module are different in at least one of power consumption, hardware composition, and a waveform of a transmitted signal, and power consumption of the first module is lower than power consumption of the second module. The first module is, for example, a low-power radio (low-power radio, LR). The low-power radio is based on a chirp (chirp) signal, or an on-off key (on-off key, OOK) signal, or a passive reflected signal. The second module is, for example, a main radio (main radio, MR). The main radio is based on an orthogonal frequency division multiplexing (orthogonal frequency division multiplexing, OFDM) signal or a discrete Fourier transform spread orthogonal frequency division multiplexing (discrete fourier transform spread orthogonal frequency division multiplexing, DFT-S-OFDM) signal. As shown in FIG. 2b, the low-power radio ensures coverage, and a transmit power of the main radio is dynamically adjusted based on a user request. Based on this, when only a near-point user or even no load exists in a network, the main radio may transmit a signal at a low transmit power. For a user not covered by the main radio, the user may send assistance information to trigger a base station to increase a transmit power or increase a quantity of repetitions.

In a scenario in which both a low-power radio and a main radio are deployed on the network device, because signals sent by the low-power radio and the main radio have different waveforms and transmit powers, the transmit power of the main radio can be dynamically adjusted. In this architecture, if a cell does not transmit a signal at a full power, whether to perform cell handover is directly determined based on a measurement result of the signal. As a result, the terminal device may perform the cell handover in advance, which increases network energy consumption. In this architecture, how to perform mobility management, that is, how to perform cell selection, cell reselection, and cell handover, is one of problems that need to be urgently resolved. If the network device has a power headroom, theoretically, as shown in FIG. 2c, when the terminal device is outside a coverage range of the main radio or signal quality is poor, whether to trigger a target cell to increase a transmit power may be further considered.

To resolve the foregoing problem, an embodiment of this application provides a communication method. Before specific implementations of the method provided in embodiments of this application are described, mobility management is first described.

For example, a terminal device is a UE, and a network device is a base station. Based on a connection status between the UE and the base station and a connection status between the UE and a core network, NR supports the UE in three states: an idle (idle) state, an inactive (inactive) state, and a connected (connected) state. Details are as follows:

RRC connected state: An RRC connection is established between the UE and the base station.

RRC idle state: No RRC connection is established between the UE and the base station.

RRC inactive state: The UE in this state suspends data processing, but the base station still maintains context information of the UE. Simply speaking, an air interface state of the UE in the RRC inactive state is similar to that of the UE in the RRC idle state. However, from a perspective of a core network side, the UE in the RRC inactive state is still in the connected state.

Mobility management in different states is classified into:
RRC connected state: cell handover.
RRC idle state: cell reselection and tracking area (tracking area, TA) update.
RRC inactive state: cell reselection, base station notification area (RAN notification area, RNA) update, TA update, and the like.

It can be learned that the mobility management in the RRC inactive state is similar to the mobility management in the RRC idle state, and mainly includes the cell reselection, and the RNA or TA update. An RNA is similar to a TA. A core idea of the RNA and the TA is that when the UE moves out of the area (the RNA area or the TA area), the UE needs to re-establish a connection to notify a network side, so that the network side can subsequently page the UE in a new RNA area or a new TA area.

For the cell reselection, an entire procedure includes three stages: neighboring-cell measurement initiation, reselection evaluation and decision, and cell reselection execution. In an NR system, a measurement signal for cell reselection is an SSB. The following describes the three stages in detail.

### 1.Neighboring-cell measurement initiation

To achieve UE energy saving and power reduction by restricting measurement operations, the UE starts the neighboring-cell measurement only when a specific condition is met. Based on the condition, a decision is made on a current serving cell, and the neighboring-cell measurement is started only after the decision succeeds.

Conditions for starting the neighboring-cell measurement are mainly based on two factors: a cell reselection priority and signal quality of the current serving cell. Details are as follows:
(1) If a priority of a neighboring cell is higher than that of the serving cell, the neighboring-cell measurement is unconditionally started regardless of the signal quality of the serving cell.
(2) If the priority of the neighboring cell is equal to that of the serving cell, whether to start the neighboring-cell measurement is determined based on the signal quality of the current serving cell and a signal quality threshold configured on the network side (a threshold defined in NR, or an intra-frequency measurement start threshold S_{intrasearchP} or an inter-frequency measurement start threshold S_{nonintrasearchP} in a system information block 2 (system information block, SIB2)).
   (a) If the signal quality of the current serving cell is higher than the signal quality threshold configured on the network side, the neighboring-cell measurement is not started.
   (b) If the signal quality of the current serving cell is lower than or equal to the signal quality threshold configured on the network side, the neighboring-cell measurement is started.
(3) If the priority of the neighboring cell is lower than that of the serving cell, whether to start the neighboring-cell measurement is determined based on the signal quality of the current serving cell and the signal quality threshold configured on the network side.

It can be learned that the cell reselection priority is one of key factors that affect whether to start the neighboring-cell measurement. In the NR system, the cell reselection priority is usually obtained from system information of the current serving cell, and this type of priority may also be referred to as a common cell reselection priority. In addition, the cell reselection priority may alternatively be obtained from an RRC release (RRC release) message or inherited from another system, and this type of message is referred to as a UE-specific priority. If the UE obtains both the common cell reselection priority and the UE-specific priority, the UE ignores the common cell reselection priority.

### 2. Reselection evaluation and decision

Similar to the foregoing neighboring-cell measurement start, the reselection evaluation and decision may also be classified into the following three scenarios based on priorities.
(1) Reselection evaluation and decision for a neighboring cell with a higher priority.
   The UE stays in the serving cell for more than one second, and signal quality of the neighboring cell with the higher priority is higher than a cell reselection threshold (Thresh_{X,highP}, Thresh_{X,highQ}) of a frequency broadcast in a system information block 4 (system information block, SIB4).
(2) Reselection evaluation and decision for a neighboring cell with a same priority.
   (a) Calculate R values of the neighboring cell and the current serving cell.
      The R value of the cell is calculated according to formulas in the 3rd generation partnership project (3rd generation partnership project, 3GPP) TS 38.304.
      a. Signal quality level of the neighboring cell: R*ₙ* = Q_{meas,n} - Q_{offset} - Q_{offsettemp}.
      b. Signal quality level of the current serving cell: Rₛ = Q_{meas,n} + Q_{hyst} - Q_{offsettemp}.
      R*ₙ* is the R value of the neighboring cell. Rₛ is the R value of the serving cell. Qₘₑₐₛ is a reference signal received power (reference signal received power, RSRP) value used for cell reselection. Q_{hyst} is a hysteresis value of a ranking criterion. Q_{offset} and Q_{offsettemp} are used to determine an offset. The parameter is sent to the terminal device via system information.
   (b) The UE stays in the serving cell for more than one second, and a selected best cell (a cell with a highest R value is selected in a ranking result) meets a cell reselection criterion throughout a period specified by TreselectionNR.
(3) Reselection evaluation and decision for a neighboring cell with a lower priority.

None of cells with same or higher priorities meets the cell reselection criteria. Moreover, within a period of time, the signal quality of the serving cell is lower than a threshold (Squal < Thresh_{Serving,LowQ}) indicated in the SIB2, and a low-priority frequency is higher than a threshold (Squal > ThreshX, LowQ) in the SIB4 or a system information block 5 (system information block, SIB5).

### 3. Cell reselection execution

After the neighboring-cell measurement is completed and it is determined that a new cell that meets a cell reselection condition exists, the UE starts to attempt to camp on the new cell. The UE searches for a target cell, and then receives system information of the target cell. If there is no access restriction, the UE camps on the target cell, that is, the UE reselects the target cell. Otherwise, the UE still camps on the current serving cell.

For the UE in the connected state, the UE performs measurement and feedback based on a measurement object (an SSB or a CSI-RS) configured on the network side. The network side determines, based on a reported measurement result, whether to perform handover, interacts with a target base station, obtains configuration information of the target base station, and sends handover signaling to instruct the UE to perform handover. Based on whether the serving cell before and after the handover is served by different gNodeBs or whether there is a corresponding Xn interface between gNodeBs, the handover is classified into three scenarios: intra-gNodeB handover, inter-gNodeB Xn handover, and inter-gNodeB NG handover. In any of the scenarios, the handover mainly includes the following steps:
(1) The gNodeB makes a decision on whether to start a handover procedure.
(2) The gNodeB sends measurement configuration information to the UE via an RRCReconfiguration message.
(3) The UE performs related measurement based on the measurement configuration information, and generates a cell measurement result.
(4) The UE reports the measurement result to the gNodeB through a measurement report (measurement result reporting).
(5) The gNodeB determines, based on the measurement report, whether there is a suitable new serving cell.
(6) The gNodeB finds the suitable new serving cell and instructs the UE to perform handover.

In conventional basic NR handover, the following two cases may occur due to radio environment deterioration between the UE and a source base station. In both cases, the handover fails. In this case, the UE detects a radio link failure and initiates an RRC reestablishment process.
(1) The measurement report from the UE cannot reach the base station.
(2) After receiving the measurement report, the base station sends a handover command to the UE, but the handover command cannot reach the UE.

Therefore, to reduce a handover failure probability and improve handover reliability, the 3GPP release 16 (release 16, R16) protocol introduces conditional handover (conditional handover, CHO). With CHO, the source base station sends the handover command (with radio parameter configurations of candidate target base stations and handover execution trigger conditions) to the UE before the radio environment between the UE and the source base station further deteriorates, so that the UE knows in advance how to access the target base stations. After finding, in the candidate target base stations, a base station that meets a handover triggering condition, the UE may autonomously determine to initiate handover execution. In this way, a chance of successful message transmission is increased, thereby improving a handover success rate.

In addition, in the conventional NR basic handover, a measurement configuration is obtained and a measurement result is reported via RRC signaling. The RRC signaling takes effect for at least a dozen of milliseconds, which causes a corresponding delay. Therefore, the 3GPP release 18 (release 18, R18) protocol introduces layer 1/layer 2 triggered mobility (L1/L2 triggered mobility, LTM). A core idea of LTM is that a network side configures an LTM candidate cell in advance via RRC signaling, a terminal device performs downlink synchronization and uplink synchronization (for example, receiving a downlink synchronization signal and sending an uplink preamble (preamble) sequence) in the candidate cell in advance, a UE reports a measurement result of the candidate cell via an L1 measurement report, and the network side sends a cell handover command MAC CE to instruct the terminal device to perform handover.

For cell handover in NR, regardless of basic handover, conditional handover, and L1/L2 triggered mobility, measurement signals are SSBs or CSI-RSs, and detailed information is obtained from a measurement object configuration configured by a base station. For cell reselection in NR, a measurement signal is an SSB, and detailed information is obtained from system information of the base station.

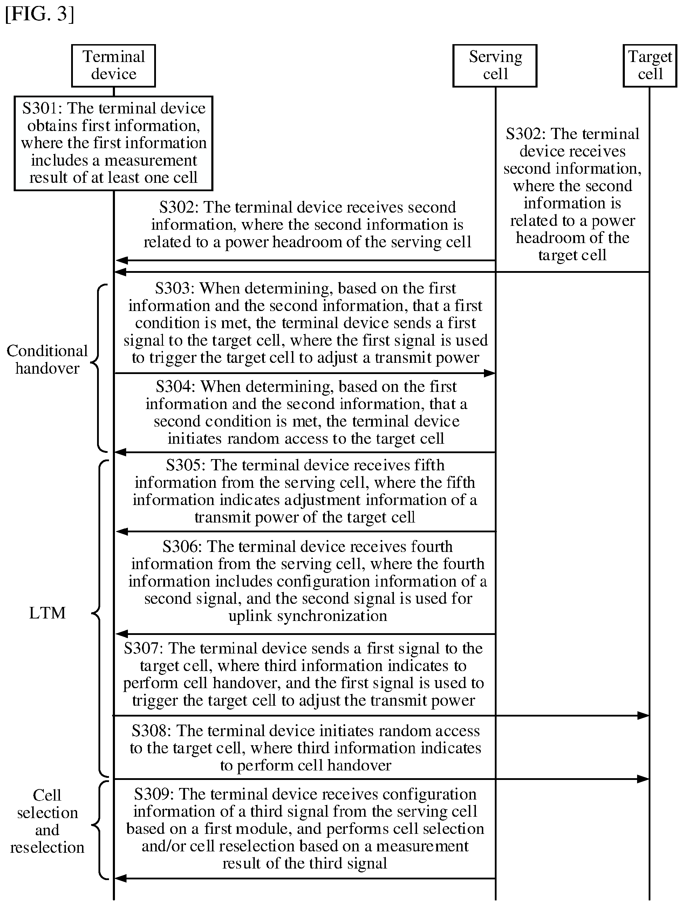

It should be understood that the foregoing mobility management is implemented in a scenario in which the base station has only a main radio. To reduce energy consumption on a base station side, both a low-power radio and a main radio are deployed on the base station side. In this architecture, an embodiment provides a communication method. FIG. 3 is a diagram of implementation of a communication method according to an embodiment of this application. The method includes the following steps.

It should be noted that in FIG. 3, the method is illustrated by using an example in which a terminal device and a network device to which a cell belongs are used as execution bodies of an interaction illustration. However, the execution bodies of the interaction illustration are not limited in this application. For example, in FIG. 3, an execution body of the method may be replaced with a chip, a chip system, a processor, a logical module, software, or the like in the terminal device or the network device.

S301: The terminal device obtains first information, where the first information includes a measurement result of at least one cell.

The first information may be understood as a measurement result of a downlink reference signal, or may be understood as signal quality between the terminal device and the at least one cell.

In an implementation, the signal quality between the terminal device and the at least one cell may be obtained based on a reference signal.

The network device to which the cell belongs configures each reference signal for the terminal device in a form of a resource. One resource is one configuration information unit, and usually includes a parameter related to a reference signal, for example, a time-frequency resource position, a quantity of ports, or a time domain type (periodic/semi-static/aperiodic) of the reference signal. The terminal device measures a current serving cell based on configuration information. If the terminal device needs to measure a neighboring cell, the terminal device further measures the neighboring cell based on a measurement configuration. A measurement report is obtained based on a measurement result of a reference signal (for example, an SS/PBCH block or a CSI-RS).

For example, when the terminal device communicates with the network device through a downlink, the reference signal may include a CSI-RS, an SSS, a primary synchronization signal (primary synchronization signal, PSS), a cell-specific reference signal (cell-specific reference signal, CRS), a demodulation reference signal (demodulation reference signal, DMRS), a reference signal (discovery reference signal, DRS), a synchronization signal/physical broadcast channel block (synchronization system/physical broadcast channel block, SS/PBCH block), and the like. The SS/PBCH block may be referred to as an SSB for short.

For another example, when the terminal device communicates with the network device to which the cell belongs through a sidelink, the reference signal may include a sidelink-synchronization signal/physical broadcast channel block (sidelink-synchronization signal/physical broadcast channel block, sidelink SSB, SL-SSB, or S-SS/PSBCH block), a sidelink-channel state information reference signal (sidelink-channel state information reference signal, SL-CSI-RS), and the like.

Optionally, the terminal device obtains configuration information of the reference signal based on a message broadcast by the network device.

It should be understood that, for ease of description, in this application, the serving cell may also be referred to as a network device to which the serving cell belongs, a neighboring cell may also be referred to as a network device to which the neighboring cell belongs, and a target cell may also be referred to as a network device to which the target cell belongs. Interaction between the serving cell, the neighboring cell, and the target cell may also be understood as interaction between the network device to which the serving cell belongs, the network device to which the neighboring cell belongs, and the network device to which the target cell belongs. A power headroom of a cell may also be referred to as a power headroom of a network device to which the cell belongs. In this embodiment, the network device to which the cell belongs is directly described as the cell. It should be understood that a person skilled in the art may undoubtedly understand that, for example, sending information to the cell means sending information to the network device to which the cell belongs.

In this embodiment, the network device to which the cell belongs includes a first module and a second module that are configured to receive and send information, the first module and the second module are different in at least one of power consumption, hardware composition, and a waveform of a transmitted signal, and power consumption of the first module is lower than power consumption of the second module. Correspondingly, the terminal device also includes a first module and a second module that are configured to receive and send information, the first module and the second module are different in at least one of power consumption, hardware composition, and a waveform of a transmitted signal, and power consumption of the first module is lower than power consumption of the second module.

Optionally, the first module is a low-power radio (low-power radio, LR), and the low-power radio receives and sends a first type of signal Type 1, where the first type of signal is a chirp (chirp) signal, an on-off key signal, or a passive reflected signal.

Optionally, the second module is a main radio (main radio, MR), and the main radio receives and sends a second type of signal Type 2 signal. The second type of signal is an orthogonal frequency division multiplexing (orthogonal frequency division multiplexing, OFDM) signal or a discrete Fourier transform spread orthogonal frequency division multiplexing (discrete fourier transform spread orthogonal frequency division multiplexing, DFT-S-OFDM) signal.

Because waveforms and transmit powers of the first type of signal and the second type of signal are different, coverage ranges of the first type of signal and the second type of signal may be different. The first type of signal is used to ensure cell coverage. To be specific, a terminal device in the cell coverage can receive the first type of signal regardless of whether the terminal device is in an idle (idle) state, an inactive (inactive) state, or a connected (connected) state. The second type of signal provides a service for a user who has a data transmission requirement, and a status of the terminal device needs to be considered. To be specific, only the terminal device in the inactive state that supports smallpacket data transmission or the terminal device in the connected state is considered. It should be understood that a transmit power adjusted by the network device to which the cell belongs ensures coverage of only this type of user.

In this architecture, the low-power radio of the network device to which the cell belongs is configured to ensure coverage, and therefore a transmit power of the low-power radio is relatively fixed. The main radio of the network device to which the cell belongs is configured to provide a service for the user, and therefore a transmit power of the main radio can be dynamically adjusted, for example, flexibly adjusted based on a location, channel quality, a data amount, or the like of the terminal device.

In this architecture, for the terminal device in the connected mode, the network device to which the cell belongs mainly receives and sends signals through the main radio. Therefore, the cell handover is mainly measured based on a reference signal sent by the main radio.

It should be understood that, when determining whether to perform cell handover, the terminal device correspondingly further needs to consider a power headroom status of the cell. In this case, the terminal device periodically receives second information from the network device to which the cell belongs. For details, refer to content of S302.

It should be understood that an execution sequence of S301 and S302 is not limited.

S302: The terminal device receives the second information, where the second information is related to a power headroom of the at least one cell.

The at least one cell includes at least one of a serving cell and a neighboring cell, and the neighboring cell includes a target cell. In this step, corresponding to different handover scenarios, content of the second information received by the terminal device may be different.

Optionally, the second information indicates a range of the power headroom and/or whether the power headroom exists.

Optionally, the network device to which the cell belongs includes the first module and the second module that are configured to receive and send information, the first module and the second module are different in at least one of the power consumption, the hardware composition, and the waveform of the transmitted signal, and the power consumption of the first module is lower than the power consumption of the second module. The second information is related to a power headroom of the second module of the network device to which the cell belongs.

The power headroom is classified into the power headroom of the network device to which the cell belongs and a power headroom of a beam, and the two power headrooms may be the same or may be different.

In an implementation, the terminal device may receive or update the second information in one or more of the following manners.

Manner 1: Reception based on an SSB.

Optionally, the SSB may be replaced with an SSS, a CSI-RS, or a master information block (master information block, MIB).

Manner 2: Reception based on a SIB.

The network device to which the cell belongs sends the SIB to the terminal device, where the SIB carries the second information, and the second information is broadcast via the SIB.

Manner 3: Reception based on DCI.

The network device to which the cell belongs sends the DCI to the terminal device, where the DCI carries the second information.

Optionally, the DCI may be replaced with a media access control control element (media access control control element, MAC CE).

Manner 4: Update based on an indication of a paging short message (paging short message).

When the power headroom of the network device to which the cell belongs changes, the network device to which the cell belongs may update the second information by using a paging message, and the second information is carried in a short message scrambled based on a paging radio network temporary identifier (paging radio network temporary identifier, P-RNTI).

Optionally, a higher layer (a MAC layer) of the terminal device may determine, based on an out-of-synchronization indication and a power headroom existence indication that are reported by a physical layer, whether the network device to which the cell belongs has a power headroom or a range of a power headroom.

After the terminal device obtains the first information and the second information, the terminal device may determine, based on the first information and the second information, whether to initiate random access or whether to trigger the target cell to adjust a transmit power.

In an example, cell handover scenarios mainly include basic handover, conditional handover, and LTM. For ease of description, the following describes the steps in this embodiment with reference to the scenarios.

### 1. Basic handover

In the basic handover scenario, when reporting a measurement result to the serving cell, the terminal device further considers a power headroom of the neighboring cell, to prevent the terminal device from performing cell handover in advance when there is a power headroom in a to-be-handed-over neighboring cell, thereby improving a cell handover success rate.

In the basic handover scenario, a main execution procedure is as follows:

(1) The terminal device reports the measurement result to the serving cell.

In an implementation, the terminal device receives fifth information from a neighboring cell, where the fifth information is related to a power headroom of at least one neighboring cell, and the at least one neighboring cell includes the serving cell and/or the target cell.

The terminal device sends the first information and the fifth information to the serving cell.

Optionally, the fifth information indicates a range of a power headroom of the target cell and/or whether a power headroom of the target cell exists.

Optionally, the fifth information indicates a range of a power headroom of the serving cell and/or whether a power headroom of the serving cell exists. Optionally, the fifth information is indicated by a synchronization sequence, carried in a master information block (master information block, MIB), broadcast through a system information block (system information block, SIB), or carried in a MAC CE or DCI.

In another implementation, the serving cell receives fifth information sent by a neighboring cell.

In this implementation, the fifth information of the neighboring cell does not need to be reported by the terminal device, but is completed based on interaction between cells. The serving cell may directly receive the fifth information sent by the neighboring cell, and when the fifth information of the neighboring cell changes, the neighboring cell sends changed fifth information to the serving cell.

(2) The serving cell determines, based on the first information and the fifth information, whether handover can be performed and whether the target cell needs to be triggered to adjust the transmit power.

After the serving cell receives the fifth information and the first information that is reported by the terminal device, there are the following two implementations.

In a first implementation, the serving cell sends seventh information to the target cell, where the seventh information is used to request the target cell to adjust the transmit power.

In addition to transmit power adjustment request information, optionally, the seventh information further carries a recommended power adjustment value.

After receiving the seventh information, the target cell returns a response message. The response message carries indication information indicating whether to perform power adjustment.

Optionally, the response message further carries a power adjustment value.

Optionally, the response message further carries configuration information of handover signaling sent to the terminal device.

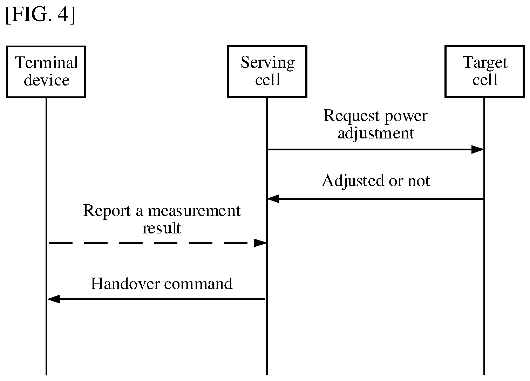

Optionally, as shown in FIG. 4, after the power of the target cell is adjusted, the terminal device is triggered to report a measurement result again, to assist the serving cell in making a cell handover decision. If the serving cell determines to perform cell handover, the serving cell correspondingly sends a handover command (handover command) to the terminal device.

In a second implementation, the serving cell receives a message from the target cell, where the message carries configuration information of a first signal.

Optionally, the message is a handover response message or another message.

In an example, after the terminal device reports the first information to the serving cell, the serving cell sends a handover request to the target cell. The target cell sends the message to the serving cell, the serving cell sends, to the terminal device via the handover command, the configuration information of the first signal that is carried in the message, and the terminal device initiates random access to the target cell.

Optionally, the first signal is an uplink wake-up signal (uplink wake-up signal, UL WUS).

Optionally, the configuration information of the first signal includes a location of a time-frequency resource, a sequence, and the like of the first signal.

The serving cell sends the configuration information of the first signal to the terminal device, and instructs/triggers the terminal device to send the first signal to the target cell, where the first signal is used to trigger the target cell to adjust the transmit power.

Optionally, after the power of the target cell is adjusted, the terminal device is triggered to report a measurement result again, to assist the serving cell in making a cell handover decision. If the serving cell determines to perform cell handover, the serving cell correspondingly sends a handover command to the terminal device.

Optionally, the terminal device includes a first module and a second module that are configured to receive and send information, the first module and the second module are different in at least one of power consumption, hardware composition, and a waveform of a transmitted signal, power consumption of the first module is lower than power consumption of the second module, and that the terminal device sends the first signal to the target cell includes:

The terminal device sends the first signal to the target cell based on the first module.

Based on the foregoing technical solution, the terminal device includes the first module with the lower power consumption and the first module with the higher power consumption. The terminal device sends the first signal to the network device based on the first module with the lower power consumption, so that device energy consumption can be further reduced.

When the terminal device sends the first signal to the network device based on the first module, the network device may receive the first signal based on the first module, and then adjust a transmit power of the second module of the network device based on the first signal.

It should be understood that the network device includes the first module and the second module that are configured to receive and send information, the first module and the second module are different in at least one of the power consumption, the hardware composition, and the waveform of the transmitted signal, and the power consumption of the first module is lower than the power consumption of the second module. In this scenario, the first module is configured to ensure coverage, and has a relatively fixed transmit power. The second module is configured to provide a service for the user, and the transmit power of the second module can be dynamically adjusted. Therefore, when the target cell has a power headroom, if the terminal device is still within a coverage range of the first module, the terminal device may trigger the target cell to adjust the transmit power, to improve a cell handover success rate, thereby reducing unnecessary connection reestablishment.

Optionally, a first network device is a network device to which the target cell belongs. The first network device includes a first module and a second module that are configured to receive and send information, the first module and the second module are different in at least one of power consumption, hardware composition, and a waveform of a transmitted signal, and power consumption of the first module is lower than power consumption of the second module. After the terminal device sends the first signal to the target cell based on the first module, the first network device receives the first signal based on the first module, and then the first network device adjusts the transmit power of the second module based on the first signal.

It should be understood that, compared with the second module, the first module has a larger coverage range and the lower power consumption. Therefore, the first network device receives the first signal based on the first module with the lower power consumption, so that a success rate of receiving the first signal can be improved, and network energy consumption can be reduced. Because the transmit power of the second module can be dynamically adjusted, after the terminal device receives the first signal based on the first module, the first network device may adjust the transmit power of the second module based on the first signal, that is, dynamically adjust the transmit power of the second module based on an actual requirement, to reduce energy consumption of the second module. Based on this, the first network device communicates with the terminal device based on an adjusted transmit power, to prevent the terminal device from performing cell handover in advance.

Optionally, the terminal device sends the first signal to the target cell based on the second module. Correspondingly, the network device receives the first signal based on the second module, and then adjusts the transmit power of the second module of the target cell based on the first signal.

It should be understood that, in this embodiment, for the terminal device in different states, signal measurement based on different types of signals/radios is defined through collaboration between the first module and the second module, so that mobility management of the terminal in the different states can be supported while network energy consumption is minimized.

### 2. Conditional handover

In the conditional handover scenario, the serving cell (source cell) requests a conditional handover configuration from one or more target cells. Correspondingly, the target cell returns a conditional handover response message to the serving cell. The conditional handover response message includes configuration information of the target cell. Then, the serving cell may send the configuration information to the terminal device via an RRC reconfiguration message. The RRC reconfiguration message includes handover-related configuration information and information about an execution condition of the conditional handover.

In this embodiment, in addition to the handover-related configuration information, the conditional handover response message sent by the target cell to the serving cell further includes configuration information of a first signal. Correspondingly, after receiving the conditional handover response message, the serving cell adds the handover-related configuration information and the configuration information of the first signal to the RRC reconfiguration message sent to the terminal device.

Optionally, the configuration information of the first signal includes information such as a time-frequency resource, a sending occasion, a candidate sequence, or a chirp slope of the first signal.

Optionally, the configuration information of the first signal further includes information about whether a power headroom of the target cell exists and/or a range of a power headroom of the target cell.

The information that is about the execution condition of the conditional handover and that is carried in the RRC reconfiguration message is the information about a first condition in this embodiment. After the terminal device receives the information about the first condition, in an implementation:

S303: When determining, based on the first information and the second information, that the first condition is met, the terminal device sends a first signal to the target cell, where the first signal is used to trigger the target cell to adjust the transmit power. Correspondingly, after receiving the first signal, the target cell adjusts, based on the first signal, the transmit power of the network device to which the cell belongs.

In this implementation, optionally, the at least one cell includes the serving cell and the target cell, and the first condition includes one or more of the following information A and information B.

Information A: A difference between a sum of a measurement result of the target cell and the power headroom of the target cell and a sum of a measurement result of the serving cell and the power headroom of the serving cell is greater than or equal to a first threshold.

Information B: A sum of a measurement result of the serving cell and the power headroom of the serving cell is less than a second threshold.

The information A is determined mainly based on the measurement result of the serving cell (namely, signal quality between the terminal device and the network device to which the serving cell belongs), the power headroom of the serving cell, the measurement result of the target cell (namely, signal quality between the terminal device and the network device to which the target cell belongs), and the power headroom of the target cell. In the information A, the first threshold may be understood as a threshold/upper limit of an offset in an event A3, where the event A3 is that a measurement result of the neighboring cell is better than the measurement result of the serving cell by an offset. In this embodiment, the terminal device also considers the power headroom of the cell. When the terminal device determines that the difference between the sum of the measurement result of the target cell and the power headroom of the target cell and the sum of the measurement result of the serving cell and the power headroom of the serving cell is greater than or equal to the first threshold, the terminal device sends the first signal to the target cell, to request the target cell to increase the transmit power.

The information B is determined mainly based on the measurement result of the serving cell and the power headroom of the serving cell. In the information B, the second threshold may be understood as an upper limit of a threshold 1 in an event A5, where the event A5 is that quality of service (namely, a measurement result) of the serving cell is lower than the threshold 1, and that quality of service (namely, a measurement result) of the neighboring cell is higher than a threshold 2. In this embodiment, the terminal device also considers the power headroom of the cell. In an example, after the serving cell sends, at a full power, a measurement signal resource to the terminal device, when the terminal device determines that the sum of the measurement result of the serving cell and the power headroom of the serving cell is less than the second threshold, the terminal device sends the first signal to the target cell, to request the target cell to increase the transmit power.

Optionally, the terminal device includes a first module and a second module that are configured to receive and send information, the first module and the second module are different in at least one of power consumption, hardware composition, and a waveform of a transmitted signal, power consumption of the first module is lower than power consumption of the second module, and that the terminal device sends the first signal to the target cell includes: The terminal device sends the first signal to the target cell based on the first module. For details, refer to the descriptions in the basic handover. Details are not described herein again.

After the terminal device sends the first signal to the target cell, and the target cell adjusts the transmit power based on the first signal, in an implementation:
S304: When determining, based on the first information and the second information, that a second condition is met, the terminal device initiates random access to the target cell.

In this implementation, optionally, the at least one cell includes the serving cell and the target cell, and the second condition includes one or more of the following information A and information B.

Information A: A sum of a measurement result of the serving cell and a power headroom of the serving cell is less than a second threshold, and a sum of a measurement result of the target cell and a power headroom of the target cell is greater than or equal to a third threshold.

Information B: A sum of a measurement result of the target cell and a power headroom of the target cell is greater than or equal to a third threshold.

In the information A, the third threshold may be understood as an upper limit of a threshold 2 in an event A5, where the event A5 is that quality of service (namely, a measurement result) of the serving cell is lower than a threshold 1, and that quality of service (namely, a measurement result) of the neighboring cell is higher than the threshold 2. In this embodiment, the terminal device also considers the power headroom of the cell. After the target cell adjusts the transmit power, if the terminal device determines that the information A is met, the terminal device initiates the random access to the target cell.

It should be understood that the third threshold may alternatively be a threshold corresponding to another event, and may be specifically set with reference to an actual requirement. This is not limited herein.

It should be understood that, after the target cell adjusts the transmit power, if the terminal device determines that the second condition is met, it indicates that the transmit power of the target cell has exceeded a maximum adjustable range. In this case, the terminal device initiates the random access to the target cell, to prevent the terminal device from performing the cell handover in advance.

### 3. LTM

In the LTM scenario, the serving cell (source cell) carries configuration information of an LTM candidate cell via RRC signaling in advance. Optionally, the terminal device may complete uplink and downlink synchronization (for example, receiving a downlink synchronization signal and sending an uplink preamble/preamble) with the target cell in advance.

In a cell handover execution stage of the LTM, the terminal device reports a physical layer-based or layer 1-based measurement report to the serving cell, where the measurement report includes a measurement result of a neighboring cell. The serving cell makes a decision based on the measurement result, and when determining to perform cell handover, sends a cell handover command to the terminal device, to instruct the terminal device to perform cell handover. The terminal device initiates random access to the target cell based on the cell handover command. After the terminal device completes the access, the target cell sends an RRC reconfiguration complete message to the terminal device, to indicate that the cell handover is completed.

In this embodiment, the configuration information of the LTM candidate cell that is sent by the serving cell, the uplink synchronization between the terminal device and the target cell, reporting of the measurement report by the terminal device, and a procedure after the terminal device receives the cell handover command are separately improved. Details are as follows:

### 1. The configuration information of the LTM candidate cell that is sent by the serving cell

In an implementation, S305: The terminal device receives fifth information from the serving cell, where the fifth information indicates adjustment information of a transmit power of the serving cell and/or adjustment information of the transmit power of the target cell, and/or the fifth information indicates power headroom information of the serving cell and/or power headroom information of the target cell.

It should be understood that the terminal device may detect/determine, by using the fifth information, that the transmit power of the serving cell and/or the transmit power of the target cell is adjusted, and/or the power headroom information of the serving cell and/or the power headroom information of the target cell. Information about transmit powers of reference signals corresponding to all candidate cells is added to the configuration information of the LTM candidate cell that is sent by the serving cell to the terminal device. The reference signal includes a CSI-RS, an SSB, or the like. When a transmit power of a reference signal corresponding to the target cell is adjusted, the serving cell sends the fifth information to the terminal device. The terminal device determines, based on the fifth information, that the transmit power of the target cell is adjusted and/or a transmit power adjustment value.

Optionally, the power headroom information of the target cell indicates a range of a power headroom of the target cell and/or whether a power headroom of the target cell exists.

Optionally, the power headroom information of the serving cell indicates a range of a power headroom of the serving cell and/or whether a power headroom of the serving cell exists.

Optionally, the fifth information is indicated by a synchronization sequence, carried in a master information block (master information block, MIB), broadcast through a system information block (system information block, SIB), or carried in a MAC CE or DCI.

Optionally, the adjustment information indicating the transmit power of the serving cell and/or the adjustment information indicating the transmit power of the target cell, and the power headroom information indicating the serving cell and/or the power headroom information indicating the target cell may be transmitted via same information (the fifth information) or a same packet, or may be transmitted via different information (for example, the fifth information and sixth information) or different packets.

In an example, the MAC CE includes an ID or an index (index) of a cell, and indication information indicating that a transmit power is adjusted. The indication information may include information about whether the transmit power is adjusted and/or a transmit power adjustment value.

Optionally, the serving cell may alternatively include the fifth information in secondstage DCI in two-stage DCI.

### 2. The uplink synchronization between the terminal device and the target cell

In an implementation, S306: The terminal device receives fourth information from the serving cell. The fourth information includes configuration information of a second signal, and the second signal is used for the uplink synchronization.

Optionally, the second signal and a first signal are different in at least one of a time-frequency resource, a sequence, and a chirp slope, and the first signal is used to trigger the target cell to adjust the transmit power.

It should be understood that, in addition to supporting the terminal device in sending the preamble to the serving cell to complete the uplink synchronization, in this embodiment, the terminal device is further supported in completing the uplink synchronization based on the second signal. Correspondingly, the configuration information of the LTM candidate cell that is sent by the serving cell includes configuration information of the first signal and the configuration information of the second signal, where the first signal is used to trigger the target cell to adjust the transmit power, and the second signal is used to trigger the terminal device to complete pre-synchronization with the target cell.

Optionally, the second signal and the first signal are different in at least one of the time-frequency resource, the sequence, and the chirp slope. Based on different sequences includes based on different preambles or different chirps.

Optionally, the second signal is a UL WUS. The second signal and the first signal are different in at least one of the time-frequency resource, a signal, or a preamble sequence.

### 3. Reporting of the measurement report by the terminal device

In this embodiment, in addition to the measurement result of the neighboring cell, the layer 1 measurement report reported by the terminal device to the serving cell optionally further includes a power headroom of the neighboring cell (a network device to which the neighboring cell belongs).

In an implementation, the terminal device reports the measurement result of the neighboring cell and the power headroom of the neighboring cell to the serving cell.

In an implementation, configuration information that is related to L1 measurement reporting and that is configured by the serving cell for the terminal device includes a virtual reporting switch. After the virtual reporting switch is turned on, the terminal device reports, to the serving cell, a corresponding channel quality indicator (Channel Quality Indicator, CQI) when the serving cell and/or the candidate cell send/sends a signal at a full power.

In this implementation, a CQI value reported by the terminal device to the serving cell is not an actually measured CQI value, but is a corresponding CQI value when the serving cell and/or the candidate cell send/sends the signal at the full power.

It should be understood that the corresponding CQI value when the serving cell and/or the candidate cell send/sends the signal at the full power is used as a decision basis of the serving cell, so that the terminal device determines, based on optimal signal quality, whether to perform cell handover. Based on this, the terminal device may determine, based on the signal quality, whether to trigger the serving cell and/or the candidate cell to increase the transmit power to improve the signal quality, to improve a cell handover success rate.

### 4. Procedure after the terminal device receives the cell handover command

In an implementation, S307: When the terminal device receives third information from the serving cell, and a measurement result of the target cell is less than a fourth threshold, the terminal device sends a first signal to the target cell, where the third information indicates to perform cell handover, and the first signal is used to trigger the target cell to adjust the transmit power.

After receiving the third information from the serving cell, if the terminal device determines that the measurement result of the target cell is less than the fourth threshold, it indicates that the transmit power of the target cell/the network device to which the target cell belongs is low. The terminal device sends the first signal to the target cell, to trigger the target cell/the network device to which the target cell belongs to adjust the transmit power.

Optionally, the terminal device includes a first module and a second module that are configured to receive and send information, the first module and the second module are different in at least one of power consumption, hardware composition, and a waveform of a transmitted signal, power consumption of the first module is lower than power consumption of the second module, and that the terminal device sends the first signal to the target cell includes: The terminal device sends the first signal to the target cell based on the first module. For details, refer to the descriptions in the basic handover. Details are not described herein again.

In another implementation, S308: When the terminal device receives third information from the serving cell, and a measurement result of the target cell is greater than or equal to a fourth threshold, the terminal device initiates random access to the target cell, where the third information indicates to perform cell handover.

If the terminal device determines that the measurement result of the target cell is greater than or equal to the fourth threshold, it indicates that the transmit power of the target cell/the network device to which the target cell belongs has exceeded a maximum adjustable range. The terminal device initiates the random access to the target cell only when the transmit power of the target cell/the network device to which the target cell belongs cannot be further adjusted, to prevent the terminal device from performing the cell handover in advance, thereby reducing energy consumption loss.

It should be understood that the fourth threshold may be understood as a threshold used to determine signal quality, and the fourth threshold may be set based on an actual requirement. If the terminal device detects that the measurement result of the target cell (namely, signal quality between the terminal device and the target cell) is less than the fourth threshold, it indicates that a signal of a second module corresponding to the network device (second network device) to which the target cell belongs is weak. Based on this, when the terminal device receives the third information, the terminal device sends the first signal to the target cell, to trigger the target cell to adjust the transmit power. When the terminal device detects that the measurement result of the target cell is greater than or equal to the fourth threshold, it indicates that the transmit power of the target cell has reached a threshold at which the terminal device can initiate random access to the target cell.

The following describes a cell selection scenario and/or a cell reselection scenario.

In an implementation, S309: The terminal device receives configuration information of a third signal from the serving cell based on the first module, and performs cell selection and/or cell reselection based on a measurement result of the third signal.

It should be understood that, because the power consumption of the first module is lower than the power consumption of the second module, a signal coverage range of the first module is generally larger than a signal coverage range of the second module. When performing the cell selection and/or the cell reselection, the terminal device receives the configuration information of the third signal based on the first module, so that a receiving success rate can be improved, and network energy consumption can be reduced.

In an architecture in which the network device to which the cell belongs includes the first module and the second module, a transmit power of a signal transmitted by the first module is relatively fixed, and the first module is used to ensure coverage. Therefore, detection for the cell selection and the cell reselection is performed based on a signal sent by a low-power radio of a base station, for example, a chirp-based signal like a chirp-based synchronization signal or a chirp-based measurement signal, where configuration information of the measurement signal may be broadcast via system information.

It is considered that the coverage range of the second module is equivalent to that of the first module when a network is busy. In this scenario, to support better flexibility, a measurement signal used for the cell selection and the cell reselection may alternatively be a signal sent based on the second module, for example, an SSB or a synchronization signal in NR or 6G, where configuration information of the measurement signal may be broadcast via system information.

To enable the foregoing two scenarios, an example in which the first module is an LR and the second module is an MR is used. Optionally, a measurement signal used for the cell reselection, namely, a measurement signal sent based on the LR or a measurement signal sent based on the MR, may be configured in a SIB message in a choice manner. The signal sent based on the LR may be a chirp-based synchronization signal, and the signal sent based on the MR may be an OFDM-based synchronization signal.

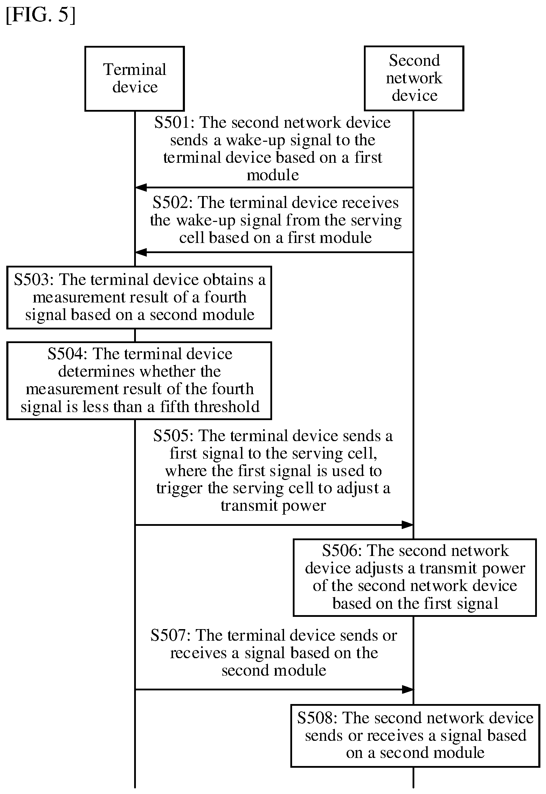

An embodiment further provides a communication method. FIG. 5 is another diagram of implementation of a communication method according to an embodiment of this application. The method includes the following steps. It should be noted that in FIG. 5, the method is illustrated by using an example in which a terminal device and a network device to which a cell belongs are used as execution bodies of an interaction illustration. However, the execution bodies of the interaction illustration are not limited in this application. For example, in FIG. 5, an execution body of the method may be replaced with a chip, a chip system, a processor, a logical module, software, or the like in the terminal device or the network device.

FIG. 5 is mainly for sending of a paging message. The paging includes a paging message sent by a higher layer of the terminal device, and further includes a sent short message. A short message defined in NR is used for the following purposes: a system information change, an earthquake and tsunami warning system (earthquake and tsunami warning system, ETWS) notification and/or a commercial mobile alert system (commercial mobile alert system, CMAS) notification, a paging stop indication, and a system information change notification for configuring an eDRX terminal device, where eDRX is extended discontinuous reception (Discontinuous Reception, DRX), and each eDRX cycle includes a plurality of DRX cycles.

Optionally, the paging is information that needs to be indicated or scheduled based on DCI scrambled by using a P-RNTI.

Optionally, the paging may indicate only the short message, or indicate only related resource information that carries the paging message, or indicate both the short message and the paging message.

In the method, a second network device is a network device to which a serving cell belongs, the second network device includes a first module and a second module that are configured to receive and send information, the terminal device includes the first module and the second module that are configured to receive and send information, the first module and the second module are different in at least one of power consumption, hardware composition, and a waveform of a transmitted signal, and power consumption of the first module is lower than power consumption of the second module.

The first module is used to ensure coverage, and has a relatively fixed transmit power. A transmit power of the second module can be dynamically adjusted with reference to an actual requirement. It is considered that when the terminal device in an idle state or an inactive state moves, the cell may fail to obtain a location of the terminal device in time, and the terminal device may move out of a coverage range of the second module. Therefore, in an architecture in which the cell has an LR and an MR, the paging message is sent through the LR. Correspondingly, the terminal device also needs to perform reception through a corresponding module. For example, a network side sends a paging message through the LR, where the paging message is carried in a chirp signal. Correspondingly, the terminal device also needs to receive the paging message based on a chirp signal. In other words, a terminal device side also needs to perform paging reception based on a low-power module. If the terminal device performs paging reception based on a first module, the terminal device receives a low-power wake-up signal (low-power wake-up signal, LP-WUS) through the first module. For example, the first module is an LR, and a second module is an MR. The steps include:

S501: The second network device sends a wake-up signal to the terminal device based on the first module.

S502: The terminal device receives the wake-up signal from the serving cell based on the first module.

Based on different information carried in the wake-up signal sent by the second network device, after the terminal device receives the wake-up signal, the terminal device wakes up the MR to perform different types of behavior.

Optionally, if the LP-WUS carries sub-group information, after waking up, the MR of the terminal device continues to perform monitoring on a paging occasion, to determine whether there is a paging message for the MR.

Optionally, if the LP-WUS carries group information, after waking up, the MR of the terminal device performs a paging early indication (paging early indication, PEI), to determine whether monitoring needs to be continued on a subsequent paging occasion.

Optionally, if the LP-WUS carries a specific identifier (ID) of the terminal device, after waking up, the MR of the terminal device initiates a random access process, to establish a connection to a network (for example, sending a preamble).

A transmit power of the MR of the second network device is dynamically adjusted. Therefore, after receiving the LR wake-up signal, the terminal device wakes up the MR to perform further receiving and sending. However, a scenario in which the transmit power of the second network device is insufficient to cover the terminal device may occur. As a result, the MR of the terminal device cannot perform the foregoing action, namely, perform monitoring on the paging occasion or a paging early indication occasion, or initiate random access.

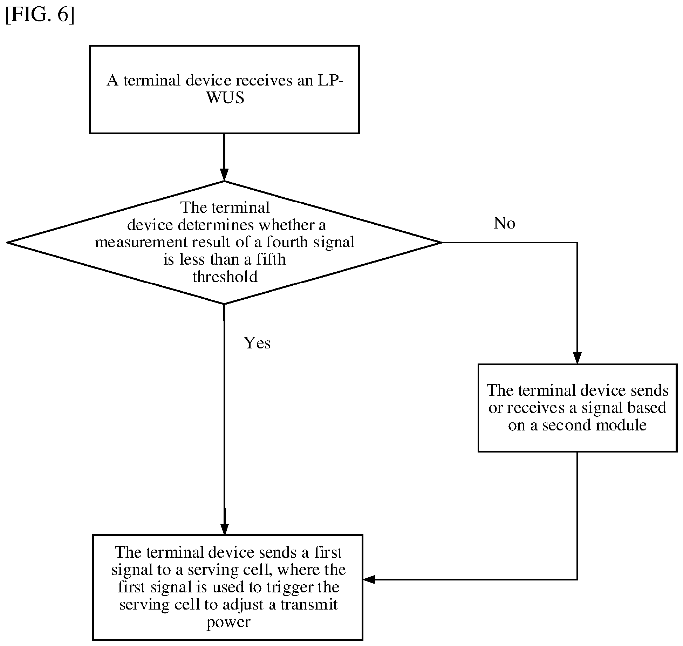

Therefore, in this embodiment, as shown in FIG. 6, after the terminal device receives the low-power wake-up signal, the terminal device wakes up the MR, performs signal quality measurement based on the MR, and determines, based on a comparison between a measurement result and a fifth threshold, whether to trigger sending of a first signal. The terminal device may further obtain an indication of a power headroom of the serving cell, for example, an indication via a synchronization sequence or a MIB, to obtain whether the power headroom exists and/or a range of the power headroom.

S503: The terminal device obtains a measurement result of a fourth signal based on the second module.

Optionally, the fourth signal is a synchronization signal.

S504: The terminal device determines whether the measurement result of the fourth signal is less than a fifth threshold. If the measurement result is less than the fifth threshold, S505 and S506 are performed; otherwise, S507 and S508 are performed.

Optionally, the fifth threshold is predefined in a protocol.

Optionally, the fifth threshold is obtained via a SIB message or RRC dedicated signaling.

If received signal quality of the MR (namely, the measurement result of the fourth signal) is lower than the threshold, the terminal device triggers sending of the first signal, to trigger the serving cell to increase the transmit power.

S505: The terminal device sends the first signal to the serving cell, where the first signal is used to trigger the serving cell to adjust the transmit power.

Optionally, the first signal may be sent through the first module of the terminal device.

Optionally, the first signal may alternatively be sent through the second module of the terminal device.

Optionally, the first signal is a UL WUS.

For the foregoing case in which the LP-WUS carries the sub-group information/group information:
In an implementation, in a multi-beam scenario, the UL WUS may further carry beam information in an explicit or implicit manner. For example, the UL WUS explicitly carries a beam ID, or a beam associated with the UL WUS may be implicitly obtained by using a sending moment of the UL WUS. For another example, LP-WUSs of different beams are sent in time division in time domain. Each LP-WUS is associated with a UL WUS resource. For example, the LP-WUSs are in one-to-one correspondence with UL WUS resources in time domain, or correspond to different UL WUS frequency domain resources, so that a base station can obtain, by receiving a UL WUS, a beam indicated by the terminal device.

In another implementation, it is considered that after receiving the LP-WUS, the terminal device may send the UL WUS. Therefore, a time interval T between receiving the LP-WUS and receiving the paging message/performing PEI monitoring by the terminal device needs to be greater than a threshold. The threshold may be predefined in a protocol, to ensure that paging reception or PEI reception is performed after a UL WUS sending occasion.

For the foregoing case in which the LP-WUS carries the specific identifier of the terminal device:

In an implementation, the UL WUS carries identification information of the terminal device. After the terminal device sends the UL WUS, the terminal device correspondingly receives a random access response (random access response, RAR). In other words, in this scenario, a first step of the random access process changes from sending the preamble to sending the UL WUS.

It is considered that the transmit power of the second network device is adjusted and takes effect. After the terminal device sends the UL WUS, a start location of a RAR receive window may be later than a start location of a RAR window in a normal random access scenario. For example, in the normal random access scenario, after sending the preamble, the terminal device starts to monitor a RAR after a moment n. However, in this embodiment, after sending the UL WUS, the terminal device starts to monitor a RAR at a moment m, where m is greater than n.

In another implementation, when the measurement result of the fourth signal is greater than or equal to the fifth threshold, the terminal sends the preamble based on a random access channel (random access channel, RACH) configuration provided in the SIB message.

S506: The second network device adjusts the transmit power of the second network device based on the first signal.

If the measurement result of the fourth signal is greater than or equal to the fifth threshold, the terminal device performs paging or PEI receiving based on the MR, or sends a physical random access channel (physical random access channel, PRACH) to the serving cell.

S507: The terminal device sends or receives a signal based on the second module.

S508: The second network device sends or receives a signal based on the second module.

It should be understood that, because the power consumption of the first module is lower than the power consumption of the second module, the transmit power of the first module is relatively fixed, and a signal coverage range of the first module is generally larger than a signal coverage range of the second module. The first module is generally used to ensure coverage. The transmit power of the second module can be dynamically adjusted. It is considered that the terminal device in the idle state or the inactive state may move out of the coverage range of the second module. The terminal device receives the wake-up signal based on the first module, so that the location of the terminal device can be obtained in time. In comparison with receiving the wake-up signal based on the second module, network energy consumption is further reduced. After the terminal device wakes up the second module based on the wake-up signal, when the measurement result of the fourth signal is less than the fifth threshold, the terminal device is triggered to send the first signal, to prevent the terminal device from performing cell handover in advance, and further reduce the network energy consumption.

The fifth threshold may be understood as a threshold of signal quality corresponding to a signal received by the terminal device, and the signal is sent by the second network device based on the second module. The terminal device determines, by comparing the measurement result of the fourth signal with the fifth threshold, whether to trigger sending of the first signal.

For the first threshold to the fifth threshold mentioned in this embodiment, optionally, the terminal device determines, based on eighth information configured by the second network device, one or more of the first threshold, the second threshold, the third threshold, the fourth threshold, the fifth threshold, or the configuration information of the first signal.

The eighth information is used to configure at least one of the following information:

the first threshold corresponding to the difference between the sum of the measurement result of the target cell and the power headroom of the target cell and the sum of the measurement result of the serving cell and the power headroom of the serving cell; the second threshold corresponding to the sum of the measurement result of the serving cell and the power headroom of the serving cell; the third threshold corresponding to the sum of the measurement result of the target cell and the power headroom of the target cell; the fourth threshold corresponding to the measurement result of the target cell; or the fifth threshold corresponding to the measurement result of the fourth signal.

Optionally, the eighth information is further used to configure the configuration information of the first signal. Optionally, the eighth information may be carried in at least one of the following: system information, RRC signaling, or a MAC CE. This may alternatively be predefined.

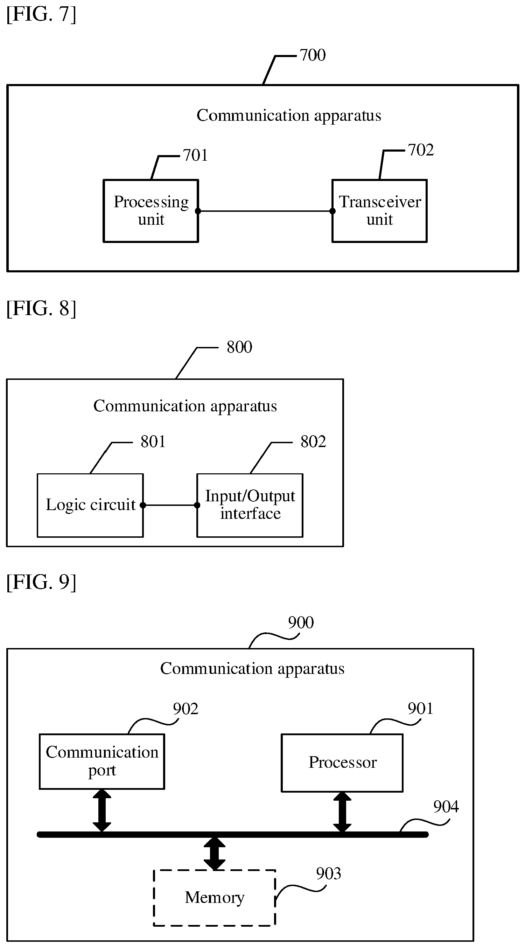

Refer to FIG. 7. An embodiment of this application provides a communication apparatus 700. The communication apparatus 700 can implement functions of the terminal device, the first network device, or the second network device in the foregoing method embodiments, and therefore can also implement beneficial effects of the foregoing method embodiments. In this embodiment of this application, the communication apparatus 700 may be the terminal device (or the first network device or the second network device), or may be an integrated circuit or an element, for example, a chip, in the terminal device (or the first network device or the second network device).

It should be noted that a transceiver unit 702 may include a sending unit and a receiving unit, which are respectively configured to perform sending and receiving.

In a possible implementation, when the apparatus 700 is configured to perform the method performed by the terminal device in the foregoing embodiments, the apparatus 700 includes a processing unit 701 and the transceiver unit 702. The processing unit 701 is configured to obtain first information, where the first information includes a measurement result of at least one cell. The transceiver unit 702 is configured to receive second information, where the second information is related to a power headroom of the at least one cell. The processing unit 701 is further configured to send a first signal to a target cell when the first information and the second information meet a first condition, where the first signal is used to trigger the target cell to adjust a transmit power. The processing unit 701 is further configured to initiate random access to the target cell when the first information and the second information meet a second condition.

In a possible implementation, when the apparatus 700 is configured to perform the method performed by the terminal device in the foregoing embodiments, the apparatus 700 includes the processing unit 701 and the transceiver unit 702. The processing unit 701 is configured to receive a wake-up signal from a serving cell based on a first module. The processing unit 701 is configured to obtain a measurement result of a fourth signal based on a second module. The transceiver unit 702 is configured to send a first signal to the serving cell when the measurement result of the fourth signal is less than a fifth threshold, where the first signal is used to trigger the serving cell to adjust a transmit power; or the transceiver unit 702 is configured to send or receive a signal based on the second module when the measurement result of the fourth signal is greater than or equal to a fifth threshold.

In a possible implementation, when the apparatus 700 is configured to perform the method performed by the first network device in the foregoing embodiments, the apparatus 700 includes the processing unit 701 and the transceiver unit 702. The transceiver unit 702 is configured to receive a first signal. The processing unit 701 is configured to adjust a transmit power of the first network device based on the first signal.

In a possible implementation, when the apparatus 700 is configured to perform the method performed by the second network device in the foregoing embodiments, the apparatus 700 includes the transceiver unit 702. The transceiver unit 702 is configured to send eighth information to a terminal device, where the eighth information is used to configure one or more of a first threshold, a second threshold, a third threshold, a fourth threshold, a fifth threshold, or configuration information of a first signal.

It should be noted that for details of content such as an information execution process of the unit of the communication apparatus 700, refer to the descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to obtain first information, where the first information includes a measurement result of at least one cell. The input/output interface 802 is configured to receive second information, where the second information is related to a power headroom of the at least one cell. The logic circuit 801 is further configured to send a first signal to a target cell when the first information and the second information meet a first condition, where the first signal is used to trigger the target cell to adjust a transmit power. The logic circuit 801 is further configured to initiate random access to the target cell when the first information and the second information meet a second condition.

Optionally, the logic circuit 801 is configured to receive a wake-up signal from a serving cell based on a first module; the logic circuit 801 is configured to obtain a measurement result of a fourth signal based on a second module; and the input/output interface 802 is configured to send a first signal to the serving cell when the measurement result of the fourth signal is less than a fifth threshold, where the first signal is used to trigger the serving cell to adjust a transmit power; or the input/output interface 802 is configured to send or receive a signal based on the second module when the measurement result of the fourth signal is greater than or equal to a fifth threshold.

Optionally, the input/output interface 802 is configured to receive a first signal; and the logic circuit 801 is configured to adjust a transmit power of a first network device based on the first signal.

Optionally, the input/output interface 802 is configured to send eighth information to a terminal device, where the eighth information is used to configure one or more of a first threshold, a second threshold, a third threshold, a fourth threshold, a fifth threshold, or configuration information of a first signal.

The logic circuit 801 and the input/output interface 802 may further perform other steps performed by a first communication apparatus or a second communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by software. Some or all functions of the processing apparatus may be implemented through software.

Optionally, the processing apparatus may include a memory and a processor. The memory is configured to store a computer program. The processor reads and executes the computer program stored in the memory, to perform corresponding processing and/or steps in any one of the method embodiments.

Optionally, the processing apparatus may include only a processor. A memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more fieldprogrammable gate arrays (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip, or any combination of the foregoing chips or processors.

FIG. 9 shows a communication apparatus 900 in the foregoing embodiments according to an embodiment of this application. The communication apparatus 900 may be specifically the communication apparatus serving as the terminal device in the foregoing embodiments. In the example shown in FIG. 9, the terminal device is implemented as a terminal device (or a component in the terminal device).

In a diagram of a possible logical structure of the communication apparatus 900, the communication apparatus 900 may include but is not limited to at least one processor 901 and a communication port 902.

The transceiver unit 702 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement the steps implemented by the terminal device in the foregoing method embodiments, and achieve the technical effects corresponding to the terminal device. For a specific implementation of the communication apparatus shown in FIG. 9, refer to the descriptions in the foregoing method embodiments. Details are not described herein again.

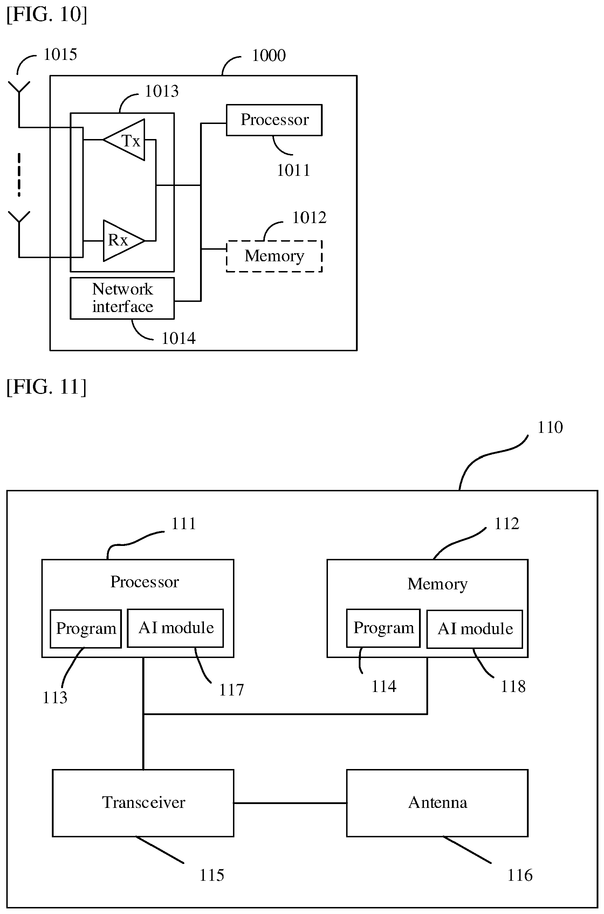

FIG. 10 is a diagram of a structure of a communication apparatus 1000 in the foregoing embodiments according to an embodiment of this application. The communication apparatus 1000 may be specifically the communication apparatus serving as the network device in the foregoing embodiment. In the example shown in FIG. 10, the network device is implemented as a network device (or a component in a network device). For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes, for example, performs demodulation processing and decoding processing on, the digital baseband signal or the digital intermediate frequency signal. In addition, the transmitter Tx of the transceiver 1013 is further configured to receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes a receiving unit and a sending unit. The receiving unit may also be referred to as a receiver machine, an input port, a receiver circuit, or the like. The sending unit may be referred to as a transmitter machine, a transmitter, a transmission circuit, or the like.

It should be noted that the communication apparatus 1000 shown in FIG. 10 may be specifically configured to implement the steps implemented by the network device in the foregoing method embodiments, and achieve the technical effects corresponding to the network device. For a specific implementation of the communication apparatus 1000 shown in FIG. 10, refer to the descriptions in the foregoing method embodiments. Details are not described herein again.

FIG. 11 is a diagram of a structure of a communication apparatus in the foregoing embodiments according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 111 may include a program 113 (which may also be referred to as code or instructions sometimes). The program 113 may be run on the processor 111, so that the communication apparatus 110 performs the method described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, so that the communication apparatus 110 performs the method described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 may also be referred to as a processing unit sometimes, and controls the communication apparatus (for example, the RAN node or the terminal). The transceiver 115 may also be referred to as a transceiver unit, a transceiver machine, a transceiver circuit, a transceiver, or the like sometimes, and is configured to implement a transceiver function of the communication apparatus through the antenna 116.

The processing unit 701 shown in FIG. 7 may be the processor 111. The transceiver unit 702 shown in FIG. 7 may be a communication interface, the communication interface may be the transceiver 115 in FIG. 11, and the transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (also referred to as a computer program). When the computer program product is executed by a processor, the processor performs the method in the possible implementations of the first communication apparatus or the second communication apparatus.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first communication apparatus or the second communication apparatus in the foregoing method embodiments.

An embodiment of this application further provides a communication system. An architecture of the network system includes the first communication apparatus and the second communication apparatus in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to conventional technologies, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

## Claims

1. A communication method, wherein the method is applied to a terminal device, and the method comprises:
obtaining first information, wherein the first information comprises a measurement result of at least one cell;
receiving second information, wherein the second information is related to a power headroom of the at least one cell;
sending a first signal to a target cell when the first information and the second information meet a first condition, wherein the first signal is used to trigger the target cell to adjust a transmit power; and
initiating random access to the target cell when the first information and the second information meet a second condition.

2. The method according to claim 1, wherein the at least one cell comprises a serving cell and the target cell, and the first condition comprises at least one of the following:
a difference between a sum of a measurement result of the target cell and a power headroom of the target cell and a sum of a measurement result of the serving cell and a power headroom of the serving cell is greater than or equal to a first threshold;
a sum of a measurement result of the serving cell and a power headroom of the serving cell is less than a second threshold; or
third information of the serving cell is received, and a measurement result of the target cell is less than a fourth threshold, wherein the third information indicates to perform cell handover.

3. The method according to claim 1, wherein the at least one cell comprises a serving cell and the target cell, and the second condition comprises at least one of the following:
a sum of a measurement result of the serving cell and a power headroom of the serving cell is less than a second threshold, and a sum of a measurement result of the target cell and a power headroom of the target cell is greater than or equal to a third threshold;
a sum of a measurement result of the target cell and a power headroom of the target cell is greater than or equal to a third threshold; or
third information of the serving cell is received, and a measurement result of the target cell is greater than or equal to a fourth threshold, wherein the third information indicates to perform cell handover.

4. The method according to any one of claims 1 to 3, wherein the terminal device comprises a first module and a second module that are configured to receive and send information, the first module and the second module are different in at least one of power consumption, hardware composition, and a waveform of a transmitted signal, power consumption of the first module is lower than power consumption of the second module, and sending the first signal to the target cell comprises: sending the first signal to the target cell based on the first module.

5. The method according to any one of claims 1 to 4, further comprising: receiving fourth information of the serving cell, wherein the fourth information comprises configuration information of a second signal, the second signal is used for uplink synchronization, the second signal and the first signal are different in at least one of a time-frequency resource, a sequence, and a chirp slope, and the first signal is used to trigger the target cell to adjust the transmit power.

6. The method according to any one of claims 1 to 5, wherein a method for obtaining adjustment of a transmit power of the serving cell and/or the transmit power of the target cell comprises:
receiving fifth information from the serving cell, wherein the fifth information indicates adjustment information of the transmit power of the serving cell and/or adjustment information of the transmit power of the target cell, and/or the fifth information indicates power headroom information of the serving cell and/or power headroom information of the target cell.

7. The method according to claim 6, wherein the fifth information is carried in a media access control control element MAC CE or downlink control information DCI.

8. The method according to any one of claims 1 to 7, wherein the terminal device comprises the first module and the second module that are configured to receive and send information, the first module and the second module are different in at least one of the power consumption, the hardware composition, and the waveform of the transmitted signal, the power consumption of the first module is lower than the power consumption of the second module, and the method further comprises: receiving configuration information of a third signal based on the first module; and performing cell selection and/or cell reselection based on a measurement result of the third signal.

9. A communication method, wherein the method is applied to a terminal device, the terminal device comprises a first module and a second module that are configured to receive and send information, the first module and the second module are different in at least one of power consumption, hardware composition, and a waveform of a transmitted signal, power consumption of the first module is lower than power consumption of the second module, and the method comprises:
receiving a wake-up signal from a serving cell based on the first module;
obtaining a measurement result of a fourth signal based on the second module; and
sending a first signal to the serving cell when the measurement result of the fourth signal is less than a fifth threshold, wherein the first signal is used to trigger the serving cell to adjust a transmit power; or
sending or receiving a signal based on the second module when the measurement result of the fourth signal is greater than or equal to a fifth threshold.

10. A communication method, wherein the method is applied to a first network device, the first network device is a network device to which the target cell belongs, and the method comprises:
receiving a first signal; and
adjusting a transmit power of the first network device based on the first signal.

11. The method according to claim 10, further comprising:
sending fifth information to a serving cell, wherein the fifth information indicates adjustment information of a transmit power of the target cell and/or power headroom information of the target cell.

12. The method according to claim 10 or 11, wherein the first network device comprises a first module and a second module that are configured to receive and send information, the first module and the second module are different in at least one of power consumption, hardware composition, and a waveform of a transmitted signal, the power consumption of the first module is lower than the power consumption of the second module, and receiving the first signal comprises:
receiving the first signal based on the first module; and
adjusting the transmit power of the first network device based on the first signal comprises:
adjusting a transmit power of the second module based on the first signal.

13. The method according to any one of claims 10 to 12, wherein the method further comprises:
receiving seventh information from the serving cell, wherein the seventh
information is used to request the target cell to adjust the transmit power.

14. A communication method, wherein the method is applied to a second network device, the second network device is a network device to which the serving cell belongs, and the method comprises:
sending eighth information to the terminal device, wherein the eighth information is used to configure at least one of the following information:
a first threshold corresponding to a difference between a sum of a measurement result of a target cell and a power headroom of the target cell and a sum of a measurement result of the serving cell and a power headroom of the serving cell; a second threshold corresponding to a sum of a measurement result of the serving cell and a power headroom of the serving cell;
a third threshold corresponding to a sum of a measurement result of a target cell and a power headroom of the target cell;
a fourth threshold corresponding to a measurement result of a target cell;
a fifth threshold corresponding to a measurement result of a fourth signal; or
configuration information of a first signal.

15. The method according to claim 14, further comprising:
sending fifth information to the terminal device, wherein the fifth information indicates adjustment information of a transmit power of the serving cell and/or adjustment information of a transmit power of the target cell, and/or the fifth information indicates power headroom information of the serving cell and/or power headroom information of the target cell.

16. The method according to claim 14 or 15, further comprising:
sending seventh information to the target cell, wherein the seventh information is used to request the target cell to adjust the transmit power.

17. A communication method, wherein the method is applied to a second network device, the second network device is a network device to which the serving cell belongs, the second network device comprises a first module and a second module that are configured to receive and send information, the first module and the second module are different in at least one of power consumption, hardware composition, and a waveform of a transmitted signal, power consumption of the first module is lower than power consumption of the second module, the second network device is the network device to which the serving cell belongs, and the method comprises:
sending a wake-up signal to the terminal device based on the first module;
receiving a first signal from the terminal device, and adjusting a transmit power of the second network device based on the first signal; or
sending or receiving a signal based on the second module.

18. A communication device, comprising a module configured to perform the method according to any one of claims 1 to 17.

19. A communication device, comprising at least one processor, wherein the at least one processor is coupled to a memory, and the at least one processor is configured to perform the method according to any one of claims 1 to 17.

20. The communication device according to claim 19, wherein the communication device is a chip or a chip system.

21. A readable storage medium, wherein the storage medium stores a computer program or instructions, and when the computer program or the instructions are executed by a communication apparatus, the method according to any one of claims 1 to 17 is implemented.

22. A computer program product, comprising a computer program or instructions, wherein when the computer program or the instructions are executed by a computer, the method according to any one of claims 1 to 17 is implemented.
